(19) Europäisches Patentamt
European Patent Office
Office européen des brevets

(11) EP 4 606 841 A1

(12) EUROPÄISCHE PATENTANMELDUNG

(43) Veröffentlichungstag:
**27.08.2025 Patentblatt 2025/35**

(21) Anmeldenummer: **24159000.9**

(22) Anmeldetag: **22.02.2024**

(51) Internationale Patentklassifikation (IPC):
***C08G 81/00*** *(2006.01)* ***C08G 63/91*** *(2006.01)*
***C08G 81/02*** *(2006.01)* ***C08F 8/00*** *(2006.01)*
***C08G 64/18*** *(2006.01)* ***C08G 77/448*** *(2006.01)*

(52) Gemeinsame Patentklassifikation (CPC):
**C08G 81/027; C08F 8/00; C08G 64/18; C08G 77/448; C08G 81/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Covestro Deutschland AG**
**51373 Leverkusen (DE)**

(72) Erfinder:
- **Bertin, Annabelle**
  **2020 ANTWERPEN (BE)**
- **Seidel, Andreas**
  **41542 Dormagen (DE)**
- **Reithmeier, Marina**
  **51069 Köln (DE)**
- **Gieler, Mandy**
  **53507 Dernau (DE)**
- **Heijl, Jan**
  **9940 EVERGEM (BE)**

(74) Vertreter: **Levpat**
**c/o Covestro AG**
**Gebäude K12**
**51365 Leverkusen (DE)**

# (54) BLOCKCOPOLYMER UND VERFAHREN ZU DESSEN HERSTELLUNG UNTER VERWENDUNG EINES SPEZIELLEN KATALYSATORS

(57) Die vorliegende Erfindung betrifft ein Verfahren zur Herstellung eines Blockcopolymers, in dem eine Zusammensetzung enthaltend
A) mindestens einen Vertreter ausgewählt aus der Gruppe bestehend aus Polycarbonaten, Polyestern und Polyestercarbonaten,
B) mindestens ein zweites Polymer ausgewählt aus der Gruppe bestehend aus jeweils OH-und/oder COOH-funktionalisierten Vinyl(co)polymeren, Olefin(co)polymeren und (Organo)Polysiloxanen,
C) mindestens ein Übergangsmetall-Carboxylat-Salz enthaltend ein Übergangsmetallkation $M^{n+}$, wobei n für eine ganze Zahl zwischen 1 und 4 steht, und ein Carboxylatanion einer einoder mehrwertigen Carbonsäure,
wobei Komponente C in einer Menge von mindestens 0,01 Gew.-Teilen, bezogen auf in Summe 100 Gewichtsteile der Komponenten A und B, zum Einsatz kommt,
durch Einbringung mechanischer und/oder thermischer Energie aufgeschmolzen, die Komponenten der Zusammensetzung gemischt und ineinander dispergiert
und die Komponenten A und B in der Schmelzedispersion der Komponenten zumindest teilweise zu dem Blockcopolymer umgesetzt werden.

Die Erfindung betrifft auch ein spezielles Blockcopolymer enthaltend Blöcke A*, abgeleitet von mindestens einem Polymer A, und Blöcke B*, abgeleitet von mindestens einem Polymer B, sowie eine thermoplastische Formmasse enthaltend das Blockcopolymer und einen Formkörper enthaltend das Blockcopolymer.

EP 4 606 841 A1

## Beschreibung

Die vorliegende Erfindung betrifft ein Verfahren zur Herstellung eines Blockcopolymers, ein in einem solchen Verfahren erhältliches Blockcopolymer sowie eine thermoplastische Formmasse und einen Formkörper enthaltend ein solches Blockcopolymer.

Aus Polycarbonaten, Polyestercabonaten und Polyestern werden seit vielen Jahren Formkörper für zahllose Anwendungen beispielsweise im Automobilbereich, im Bausektor und im Elektronikbereich hergestellt. Durch Abmischungen von den genannten Polymeren untereinander oder mit weiteren Polymeren lassen sich Polymerblends herstellen und so die Produkteigenschaften in weiten Bereichen variieren und an die jeweilige technische Anforderung der jeweiligen Anwendungsbereiche anpassen. Bei den genannten Polymerblends handelt es sich um physikalische Mischungen, bei denen keine chemischen Bindungen zwischen den verschiedenen polymeren Blendpartnern vorliegen.

Blockcopolymere hingegen enthalten chemische Bindungen zwischen chemisch verschiedenen Polymereinheiten A und B. Blockcopolymere, die aus genau zwei Polymereinheiten abgeleitet von Polymeren A und B, auch Polymerblöcke genannt, bestehen, werden als A-B Blockcopolymere bezeichnet. Es können aber auch mehr als zwei Blöcke beispielsweise in Form von A-B-A (man spricht von einem Triblockcopolymer), $A\text{-}B_n$ (man spricht von einem Pfropfblockcopolymer) oder $(A\text{-}B)_n$ (man spricht von einem Multiblockcopolymer) oder in Form von mehr als zwei chemisch unterschiedlichen Polymeren verbunden sein, wobei sich dann beispielsweise eine Struktur A-B-C ergibt. Blockcopolymere können die Eigenschaften der beteiligten einzelnen Polymere kombinieren und idealerweise ergeben sich Verbesserungen, die über das hinausgehen, was durch physikalische Mischungen in Form von Polymerblends erreichbar ist. Zusätzlich können Blockcopolymere bestehend aus Blöcken abgeleitet von den Polymeren A und B die Phasenverträglichkeit von in der Schmelze nicht mischbaren oder wenig mischbaren Blendpartnern A und B verbessern. Eine solche mindestens teilweise Nichtmischbarkeit liegt beispielsweise vor bei Polymerblends aus Polycarbonaten und Polyolefinen. Die Blockcopolymere können sich an den Phasengrenzflächen anreichern, dadurch die Grenzflächenspannung zwischen den nicht mischbaren Polymeren A und B herabsetzen und durch Ausbildung molekularer Verschlaufungen mit den beiden Polymerphasen in der Grenzfläche verhindern, dass diese Grenzflächen mechanische Schwachstellen darstellen, an denen beispielsweise unerwünschte Phasendelaminierung auftritt. Der Fachmann spricht dann im Allgemeinen von einer Kompatibilisierung der Polymere A und B durch das Blockcopolymer.

Die Herstellung von Blockcopolymeren enthaltend Polymerblöcke abgeleitet von nicht mischbaren Polymeren A und B, beispielsweise abgeleitet von Polycarbonaten (A) und Olefin(co)polymeren, Vinyl(co)polymeren und/oder (Organo)Polysiloxanen (B) ist aus dem Stand der Technik grundsätzlich bekannt.

US 4,806,599 A offenbart beispielsweise ein Triblock-Copolymer vom A-B-A-Typ, in dem die A-Segmente Polyolefin enthalten und die B-Segmente Polycarbonat enthalten sowie ein Phosgenierungsfahren zu dessen Herstellung unter Verwendung eines Monohydroxy-Polyolefins.

WO 2017/189223 A1 offenbart Polycarbonat-Polyolefin-Blockcopolymere sowie ein Verfahren zu deren Herstellung, bei dem ein Dihydroxyarylmonomer und ein disubstituiertes Carbonyl-Monomer in Gegenwart einer Hydroxyaryl-Polyolefin-Spezies in der Schmelze (als alternative Möglichkeit ist ebenfalls das Phasengrenzflächenverfahren offenbart) polykondensiert wird. Als Hydroxyaryl-Polyolefin-Spezies kommt dabei das Produkt der Reaktion einer Hydroxyaryl-Verbindung mit einem Vinyl- oder Vinyliden-terminierten Polyolefin zum Einsatz.

EP 1 063 253 A1 offenbart Polycarbonat-Polyolefin-Blockcopolymere sowie verschiedene Verfahren zu deren Herstellung. Unter anderem wird auch ein Umesterungsverfahren in der Schmelze unter Verwendung eines Zinnkatalysators beschrieben.

WO 2015/052110 A1 offenbart ein Verfahren zur Herstellung von Polysiloxan-Polycarbonat-Blockcokondensaten mittels reaktiver Extrusion ausgehend von speziellen Polycarbonaten und hydroxyarylterminierten Polysiloxanen.

WO 2015/052106 A1 offenbart ein Verfahren zur Herstellung von Polysiloxan-Polycarbonat-Blockcokondensaten ausgehend von speziellen Polycarbonaten und hydroxyarylterminierten Polysiloxanen in Gegenwart eines Salzes einer schwachen Säure.

Bei der Herstellung von Blockcopolymeren kann also von Monomeren ausgegangen und durch geeignete Verfahrensführung ein Polymeraufbau in Form von Blöcken erreicht werden. Ebenso ist aus dem zitierten Stand der Technik bekannt, dass von Polymeren oder zumindest Oligomeren ausgegangen werden kann, die dann durch eine chemische Reaktion in der Schmelze miteinander verbunden werden. Dies kann beispielsweise durch eine Umesterungsreaktion erfolgen. Dieser Ansatz hat den Vorteil, das handelsübliche Polymerprodukte miteinander zur Reaktion gebracht werden und nicht mit beispielsweise leichtflüchtigen oder hochreaktiven Substanzen umgegangen werden muss. Auch ist es möglich, die Reaktion in Apparaturen durchzuführen, die üblicherweise für die Herstellung von Polymerblends durch Compoundierung genutzt werden.

Allerdings ist die Reaktivität von Polymeren untereinander zur Ausbildung von Blockcopolymeren durch beispielsweise Umesterungsreaktionen gering. Das liegt zum einen an der geringeren Beweglichkeit von längeren Molekülketten, so dass eine räumliche Nähe der miteinander zur Reaktion zu bringenden funktionellen Gruppen der Ausgangspolymere langsamer erreicht wird als bei Reaktionen zwischen Monomeren. Zum anderen ist wie oben ausgeführt

die Mischbarkeit der bei der Blockcopolymer Bildung beteiligten Polymere A und B in der Schmelze niedrig und Reaktionen zwischen den Polymerketten können somit nur an den Phasengrenzflächen stattfinden. Das führt dazu, dass lange Reaktionszeiten notwendig sind, um einen ausreichenden Umsatz zu erreichen und/oder hohe Temperaturen gewählt werden müssen. Beide Maßnahmen können zur thermischen Schädigung der Polymere A und B führen und sind ökonomisch unvorteilhaft.

Es war daher wünschenswert, ein Verfahren zur Herstellung von Blockcopolymeren ausgehend von einem handelsüblichen Polymeren ausgewählt aus der Gruppe bestehend aus Polycarbonaten, Polyestern und Polyestercarbonaten (Polymer A) und einem mit dem Polymer A nicht mischbaren Olefin(co)polymer, Vinyl(co)polymer und/oder (Organo)Polysiloxan (Polymer B) bereitzustellen, wobei die Polymere A und B in einer heterogenen, das heißt zweiphasigen Schmelzemischung der Polymere A und B zur Reaktion gebracht werden und wobei in dem Verfahren ein verbesserter Reaktionsumsatz bei kurzen Verweilzeiten erzielt wird. Dieses Verfahren soll eine Verwendung etablierter Reaktortechnik wie beispielsweise Filmtruder oder Doppelwellenextruder zur Herstellung solcher Blockcopolymere ermöglichen bzw. unter Verwendung solcher Reaktortechnik und darin üblicher Verweilzeiten (<10 min) höhere Zielproduktausbeuten realisieren.

Überraschenderweise wurde gefunden, dass diese Aufgabe gelöst wird durch ein Verfahren zur Herstellung eines Blockcopolymers, in dem eine Zusammensetzung enthaltend

A) mindestens ein Vertreter ausgewählt aus der Gruppe bestehend aus Polycarbonaten, Polyestern und Polyestercarbonaten,

B) mindestens ein zweites Polymer ausgewählt aus der Gruppe bestehend aus jeweils OH- und/oder COOH-funktionalisierten Vinyl(co)polymeren, Olefin(co)polymeren und (Organo)Polysiloxanen,

C) mindestens ein Übergangsmetall-Carboxylat-Salz enthaltend ein Übergangsmetallkation $M^{n+}$, wobei n für eine ganze Zahl zwischen 1 und 4 steht, und ein Carboxylatanion einer ein- oder mehrwertigen Carbonsäure,

wobei Komponente C in einer Menge von mindestens 0,01 Gew.-Teilen, bezogen auf in Summe 100 Gewichtsteile der Komponenten A und B, zum Einsatz kommt,
durch Einbringung mechanischer und/oder thermischer Energie aufgeschmolzen, die Komponenten der Zusammensetzung gemischt und ineinander dispergiert und die Komponenten A und B in der Schmelzedispersion der Komponenten zumindest teilweise zu dem Blockcopolymer umgesetzt werden.

Bevorzugt kommt in dem Verfahren als Komponente B genau ein Polymer ausgewählt aus der Gruppe bestehend aus OH- und/oder COOH-funktionalisierten, bevorzugt OH-funktionalisierten Vinyl(co)polymeren, Olefin(co)polymeren und (Organo)Polysiloxanen zum Einsatz.

Die Komponente B wird bevorzugt in einer Menge von 3 bis 25 Gew.-Teilen, weiter bevorzugt 5 bis 20 Gew.-Teilen, besonders bevorzugt 7 bis 15 Gew.-Teilen, jeweils bezogen auf in Summe 100 Gew.-Teile der Komponenten A und B, eingesetzt.

Bei der Umsetzung der Komponenten A und B bilden sich kovalente Bindungen zwischen den Polymerketten beider Komponenten aus. In einer bevorzugten Ausführungsform findet die Umsetzung der Komponenten A und B zum Blockcopolymer durch eine Umesterungsreaktion bzw. Veresterungsreaktion statt.

Im Falle, dass Komponente A keine zu einer Kondensationsreaktion mit den OH- und/oder COOH-Gruppen im Polymer B fähigen funktionellen Gruppen enthält, findet die Umsetzung der Polymere A und B durch eine Umesterungsreaktion der OH- und/oder COOH-Gruppen im Polymer B mit den Carbonat-Gruppen oder Polyester-Gruppen im Polymerrückgrat des Polymer A statt. Dabei wird das Polymerrückgrat des Polymers A "geschnitten", das heißt aus einem Polymermolekül A mit dem Molekulargewicht M entsteht in der Umesterungsreaktion ein an Polymer B über eine kovalente Bindung gebundener Block, abgeleitet von Polymer A, mit einem Molekulargewicht $M_1$ sowie ein Polymermolekül A mit reduziertem Molekulargewicht $M_2$, wobei $M = M_1 + M_2$ gilt.

Sofern Komponente A OH- oder COOH-Gruppen enthält, ist es aber grundsätzlich beispielsweise auch möglich, dass diese OH- oder COOH-Gruppen im Polymer A mit dem COOHbeziehungsweise OH-funktionalisiertem Polymer B in einer Esterbildungsreaktion zu einem Blockcopolymer reagieren. Dann erfolgt die Umsetzung zum Blockcopolymer, ohne dass Polymer A "geschnitten" wird, das heißt es wird ein Blockcopolymer gebildet, in dem das Molekulargewicht der von Polymer A abgeleiteten Blöcke dem Molekulargewicht des an der jeweiligen Blockcopolymerbildungsreaktion beteiligten Moleküls des Polymers A entspricht.

Bei dem erfindungsgemäßen Verfahren wird das erfindungsgemäße Blockcopolymer enthalten. Es ist aber auch je nach Anteilen der Komponenten A und B und/oder den Reaktionsbedingungen möglich, dass die Polymere A und/oder B nicht vollständig zum Blockcopolymer reagieren. Dann bilden die nicht umgesetzten Anteile des Polymers A und/oder B zusammen mit dem durch chemische Reaktion von Polymer A mit Polymer B gebildetem Blockcopolymer eine im

Allgemeinen thermoplastische Polymerzusammensetzung (im weiteren auch als Formmasse bezeichnet). Ein Verfahren, bei dem eine solche Polymerzusammensetzung enthaltend das erfindungsgemäße Blockcopolymer entsteht, ist ebenfalls vom Wortlaut des erfindungsgemäßen Verfahrens umfasst.

In einer bevorzugten Ausführungsform wird der Katalysator gemäß Komponente C nur in einer minimal für die Erreichung eines vollständigen Umsatzes der Komponenten A und B in einer Umesterungsreaktion benötigten Menge eingesetzt.

Komponente C wird insofern bevorzugt in einer Menge von maximal 1,0 Gew.-Teilen, weiter bevorzugt maximal 0,2 Gew.-Teilen, am meisten bevorzugt maximal 0,1 Gew.-Teilen, jeweils bezogen auf in Summe 100 Gew.-Teile der Komponenten A und B eingesetzt.

Unnötig höhere Mengen an Katalysator können sich im Hinblick auf die Eigenschaften der resultierenden Verfahrensprodukte nachteilig auswirken, beispielsweise auf deren Thermo- und/oder Alterungsstabilität. Eine durch unnötig hohe Katalysatormengen resultierende verschlechterte Thermostabilität des Verfahrensproduktes kann sich beispielsweise in einer erhöhten Rückspaltung des Verfahrensproduktes, insbesondere des Polymers A beziehungsweise der von Polymer A abgeleiteten Blöcke im Blockcopolymer bereits unter den Bedingungen seiner Herstellung äußern. Diese Rückspaltung kann zu unerwünscht erhöhten Gehalten an monomeren und oligomeren Polymerbestandteilen im Verfahrensprodukt führen. Für den Fall, dass als Polymer A ein Polycarbonat oder Polyestercarbonat enthaltend von Bisphenol-A abgeleitete Struktureinheiten eingesetzt wird, können dann insbesondere im Verfahrensprodukt aus regulatorischer Sicht unerwünscht hohe Gehalte an monomerem Bisphenol A resultieren.

Bevorzugt wird Komponente C in einer Menge von 0,02 bis 1,0 Gew.-Teilen, weiter bevorzugt 0,025 bis 0,20 Gew.-Teilen, besonders bevorzugt 0,03 bis 0,1 Gew.-Teilen, jeweils bezogen auf in Summe 100 Gew.-Teile der Komponenten A und B, eingesetzt.

Wenn als Komponente A aromatisches Polycarbonat, zum Beispiel auf Basis von Bisphenol-A, zum Einsatz kommt, kann es als Folgereaktion eines Einbaus des Hydroxyl-Gruppen-funktionalisierten Polymers B in die Polymerkette der Komponente A durch Umesterung auch zusätzlich zu einem Molekulargewichtsaufbau durch Kondensationsreaktion kommen. Dabei reagiert ein bei der initialen Umesterungsreaktion gebildetes Polycarbonatmolekül mit phenolischer OH-Endgruppe mit einer Carbonat-Endgruppe abgeleitet von Phenol oder einem Phenolderivat eines zweiten Polycarbonatmoleküls unter Abspaltung von Phenol oder dem Phenolderivat. Durch Anlegen eines Unterdrucks wird das unter den Reaktionstemperaturen flüchtige abgespaltene Phenol oder Phenolderivat aus dem Reaktionsgemisch entfernt und damit dem chemischen Gleichgewicht entzogen.

Im Falle einer Umesterungsreaktion eines Polycarbonats A mit einem OH- und/oder COOH-funktionalisierten Polymer B können sowohl carbonat- oder estercarbonat-verbrückte A-B- als auch carbonat-, ester- oder estercarbonat-verbrückte B-B-Struktureinheiten entstehen.

Wie oben bereits ausgeführt, ist es wünschenswert, ein Blockcopolymer bereitzustellen, das die Phasenverträglichkeit zwischen in der Schmelze nicht mischbaren oder nur teilweise mischbaren Polymeren verbessert. Grundsätzlich können Blockcopolymere enthaltend carbonat- oder estercarbonat-verknüpfte A-B-Struktureinheiten enthaltend Blöcke abgeleitet aus den Polymeren A und B insbesondere die Phasenverträglichkeit zwischen den Homopolymeren A und B verbessern. Es ist aber auch möglich, dass ein solches Blockcopolymer die Phasenverträglichkeit von Polymeren verbessert, die nicht im Blockcopolymer als Blöcke vorliegen, beispielsweise von den Polymeren M und N. Das ist insbesondere dann zu erwarten, wenn die Polymere M und N ähnliche Polaritäten wie die Polymere A und B aufweisen.

Durch eine solche Verbesserung der Phasenverträglichkeit sollen Eigenschaftsprofile erreicht werden, die mit den entsprechenden Homopolymeren oder mit nicht verträglichen Polymermischungen aus den entsprechenden Homopolymeren nicht erreicht werden können.

Es ist aber beispielsweise anstrebenswert, die hohe Wärmeformbeständigkeit von Polycarbonaten mit der guten Spannungsrissbeständigkeit von Polyolefinen zu kombinieren, um so insgesamt verbesserte Eigenschaftsprofile zu erreichen. Auch weisen Polycarbonate und Polyolefine deutlich unterschiedliche Zähigkeitseigenschaften und Schmelzefließfähigkeiten auf. Werden aber unverträgliche Polymere miteinander vermischt ohne Maßnahmen, die eine gewisse Kompatibilität bewirken, so führt das meistens zu einer insgesamten Verschlechterung der Eigenschaften, ohne dass besondere Vorteile der einzelnen Homopolymere zutage treten.

Es war daher wünschenswert, ein Blockcopolymer bereitzustellen, mit dem in einer Polymerzusammensetzung eine vorteilhafte Balance aus Wärmeformbeständigkeit, Schmelzefließfähigkeit, Zähigkeit und Spannungsrissbeständigkeit erreicht werden kann.

Insbesondere war es wünschenswert, dass gegenüber Polycarbonat-Homopolymeren eine Verbesserung der Spannungsrissbeständigkeit bei gleichzeitiger Verbesserung der Schmelzefließfähigkeit (Reduzierung der Schmelzeviskosität) erreicht wird, wobei die hohe Wärmeformbeständigkeit (beispielsweise gemessen als Vicat-Erweichungstemperatur) und Zähigkeit (beispielsweise gemessen als Bruchdehnung) des Polycarbonats unbeeinflusst oder zumindest weitestmöglich bleibt. Das Blockcopolymer soll zur Erzielung dieser Aufgabe dabei auch als Bestandteil einer Formmasse enthaltend die Polymere A und B und/oder andere Polymere eingesetzt werden können.

Überraschend wurde gefunden, dass ein Blockcopolymer enthaltend Blöcke A*, abgeleitet von mindestens einem Polymer A, und Blöcke B*, abgeleitet von mindestens einem Polymer B, wobei Polymer A mindestens ein Polycarbonat und Polymer B mindestens ein Polymer ausgewählt aus der Gruppe bestehend aus jeweils OH- und/oder COOH-funktionalisierten Vinyl(co)polymeren, Olefin(co)polymeren und (Organo)Polysiloxanen ist,

dadurch gekennzeichnet, dass das Blockcopolymer Struktureinheiten gemäß Formeln x und y enthält

$$\text{-A*-O-C(O)-(O)}_n\text{-B*-} \qquad \text{(x)}$$

$$\text{-B*-(O)}_o\text{-C(O)-(O)}_p\text{-B*-} \qquad \text{(y)}$$

wobei n, o und p unabhängig voneinander 0 oder 1 bedeuten,
wobei -C(O)- für eine Carbonylgruppe steht,
dadurch gekennzeichnet, dass die Struktureinheiten gemäß Formel x in dem Blockcopolymer in einem molaren Anteil von 60 bis <85 mol%, bezogen auf in Summe 100 mol% Struktureinheiten gemäß Formeln x und y, vorliegen,
die genannte Aufgabe löst.

A* und B* bezeichnen die Polymerblöcke abgeleitet von den Homopolymeren A und B, die sich an die Verknüpfungen anschließen. Für den Fall eines Polycarbonats auf Basis von Bisphenol-A als Homopolymer A und eines OH-funktionalisierten Polyethylens als Komponente B ergibt sich beispielsweise für (x) folgende Struktur (1) mit n=1:

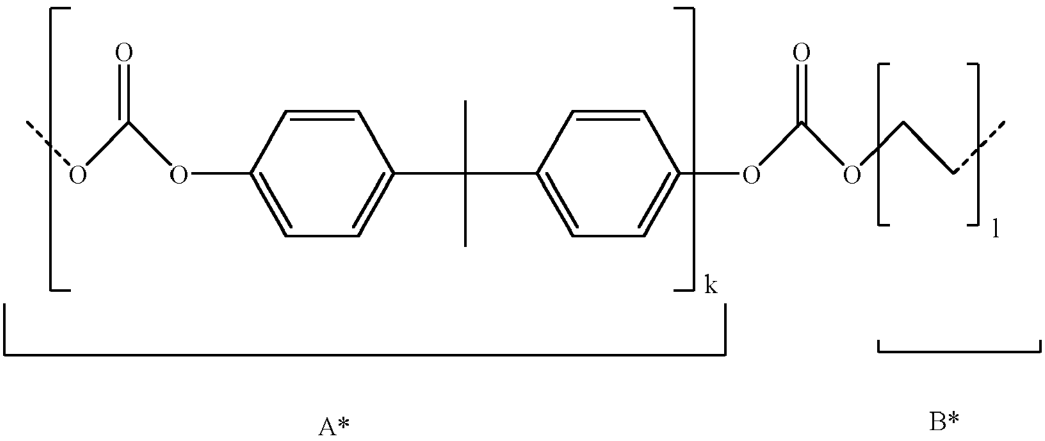

(1)

In der Struktur (1) stehen k und l jeweils für die Anzahl der Wiederholungseinheiten.

Es können auch Mischungen von Blockcopolymeren vorliegen. Dann beziehen sich die genannten Anteile der Strukturen x und y auf die Mischung insgesamt.

Struktureinheiten mit einem Wert für n, o und/oder p von 1 resultieren dabei aus einer Umesterungsreaktion eines Polycarbonats als Komponente A mit einem OH-funktionalisierten Polymer B. Struktureinheiten mit einem Wert für n, o und/oder p von 0 resultieren aus einer Umesterungsreaktion eines Polycarbonats als Komponente A mit einem COOH-funktionalisierten Polymer B mit nachgeschalteter Abspaltung von Kohlendioxid aus der intermediär gebildeten thermisch instabilen Anhydrid-Verknüpfung.

Bevorzugt sind solche Blockcopolymere, wobei n, o und p alle den gleichen Wert, also alle entweder den Wert 0 oder alle den Wert 1, aufweisen. Besonders bevorzugt weisen n, o und p alle den Wert 1 auf.

Kommt als Polymer B ein COOH-funktionalisiertes Polymer im Verfahren zum Einsatz, so bilden sich durch Umesterung zunächst Anhydrid-verknüpfte Struktureinheiten gemäß der Strukturen z1, z2 und/oder z3

$$\text{-A*-O-C(O)-O-C(O)-B*-} \qquad \text{(z1)}$$

$$\text{-B*-C(O)-O-C(O)-O-C(O)-B*-} \qquad \text{(z2)}$$

$$\text{-B*-(O)}_o\text{-C(O)-O-C(O)-B*-} \qquad \text{(z3),}$$

welche im Verfahren durch Kohlendioxidabspaltung die Struktureinheiten gemäß der Formeln x und y bilden. Je nach

Temperaturführung und Verweilzeit der Umsetzung können die erfindungsgemäßen Reaktionsprodukte aber auch noch Struktureinheiten gemäß der Strukturen z1, z2 und oder z3 enthalten.

Es war weiterhin wünschenswert, eine thermoplastische Formmasse mit verbesserten mechanischen Eigenschaften bereitzustellen. Insbesondere sollen die mechanischen Eigenschaften verbessert sein gegenüber einem Polymerblend enthaltend zwei oder mehr in der Schmelze nicht mischbare oder nur teilweise mischbare Polymere. Weiter bevorzugt soll dabei insbesondere die multiaxiale Zähigkeit, Kerbschlagzähigkeit und/oder Reißdehnung verbessert werden.

Diese Aufgabe wird gelöst durch thermoplastische Formmassen enthaltend zwei nicht oder nur teilweise mischbare Polymere mit ähnlichen Polaritäten wie A* und B* sowie das erfindungsgemäße Blockcopolymer. Daher sind solche Formmassen und daraus hergestellte Formkörper weitere Gegenstände der vorliegenden Erfindung.

Komponente A

Komponente A ist mindestens ein Polymer ausgewählt aus der Gruppe bestehend aus Polycarbonaten, Polyestercarbonaten und Polyestern, bevorzugt ausgewählt aus der Gruppe bestehend aus Polycarbonaten und Polyestercarbonaten, besonders bevorzugt ausgewählt aus der Gruppe bestehend aus Polycarbonaten.

Es können auch Mischungen strukturell verschiedener Polycarbonate, Polyestercarbonate oder Polyester zum Einsatz kommen.

Erfindungsgemäß geeignete Polycarbonate und/oder Polyestercarbonate gemäß Komponente A sind literaturbekannt oder nach literaturbekannten Verfahren herstellbar (zur Herstellung von Polycarbonaten siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung von Polyestercarbonaten, z. B. DE-A 3 007 934).

Die Herstellung erfindungsgemäß als Komponente A geeigneter Polycarbonate erfolgt z. B. durch Umsetzung von Dihydroxyarylverbindungen (auch als aromatische Diole, Diphenole oder Bisphenole bezeichnet) und/oder aliphatischen Diolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Trihydroxyaryl- oder Tetrahydroxyaryl-Verbindungen. Ebenso ist eine Herstellung über ein Schmelzepolymerisationsverfahren durch Umsetzung von Dihydroxyarylverbindungen und/oder aliphatischen Diolen mit Kohlensäureestern, beispielsweise Diphenylcarbonat möglich.

Zur Herstellung der erfindungsgemäß als Komponente A geeigneten Polycarbonate und/oder zur Herstellung der erfindungsgemäß als Komponente A geeigneten Polyestercarbonate geeignete Dihydroxyarylverbindungen sind vorzugsweise solche der Struktur (2)

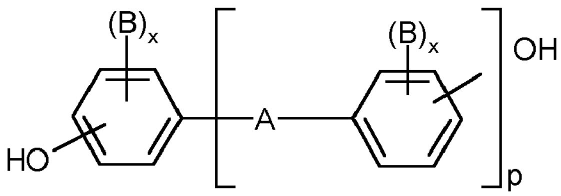

(2),

wobei

A eine Einfachbindung, $C_1$ bis $C_5$-Alkylen, $C_2$ bis Cs-Alkyliden, $C_5$ bis $C_6$-Cycloalkyliden, -O-, -SO-, -CO-, -S-, -SOz-, $C_6$ bis $C_{12}$-Arylen, an das weitere aromatische gegebenenfalls Heteroatome enthaltende Ringe kondensiert sein können,
oder ein Rest der Struktur (3) oder (4)

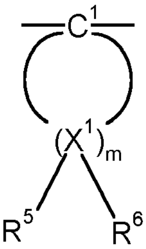

(3)

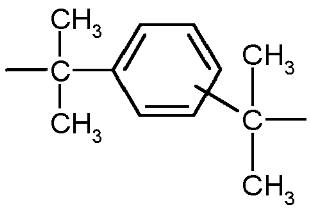

(4)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,
p 1 oder 0 sind, und
$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,
X 1 Kohlenstoff und
m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte zum Einsatz kommende Dihydroxyarylverbindungen sind Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Weiter bevorzugte zum Einsatz kommende Dihydroxyarylverbindungen sind 4,4'-Dihydroxydiphenyl, Bisphenol-A, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie Dihydroxyarylverbindungen (I) bis (III)

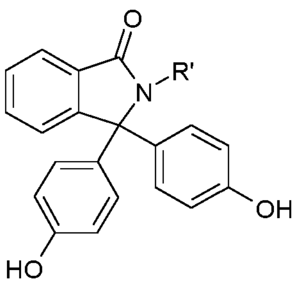

(I)

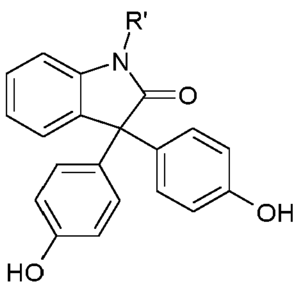

(II)

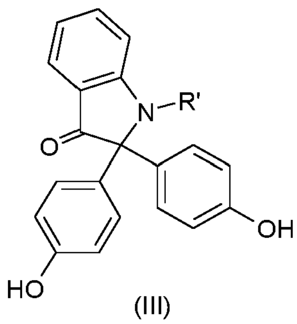

(III)

Diese und weitere geeignete Dihydroxyarylverbindungen sind z.B. in US 3 028 635 A, US 2 999 835 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Es können diese Dihydroxyarylverbindungen einzeln oder als beliebige Mischungen eingesetzt werden. Die Dihydroxyarylverbindungen sind literaturbekannt oder nach literaturbekannten Verfahren erhältlich.

Geeignete aliphatische Diole sind ausgewählt wird aus der Gruppe, bestehend aus 1,2-Cyclohexandiol, 1,3-Cyclohexandiol, 1,4-Cyclohexandiol, 1,2-Cyclohexandimethanol, 1,3-Cyclohexandimethanol, 1,4-Cyclohexandimethanol, 2,2-bis(4-Hydroxycyclohexyl)propan, Tetrahydro-2,5-furandimethanol, 2-Butyl-2-ethyl-1,3-propandiol, 2-(2-Hydroxy-ethoxy)ethanol, 2,2,4,4-Tetramethyl-1,3-cyclobutandiol, 2,2,4-Trimethyl-1,3-pentandiol, 2,2-Dimethylpropan-1,3-diol, Cyclobutan-1,1-diyldimethanol, 8-(Hydroxymethyl)-3-tricyclo[5.2.1.02,6]decanyl]methanol, 1,2-Propandiol, 1,3-Propandiol, 1,4-Butandiol, 1,5-Pentandiol, 1,6-Hexandiol, 1,8-Octandiol, Isosorbid und beliebigen Mischungen daraus.

Für die Herstellung der Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Dihydroxyarylverbindungen.

Die thermoplastischen, aromatischen Polycarbonate haben mittlere Molekulargewichte (Gewichtsmittel $M_w$) von bevorzugt 5000 bis 50000 g/mol, weiter bevorzugt 10000 bis 35000 g/mol, gemessen durch GPC (Gelpermeationschromatographie) unter Verwendung von Dichlormethan als Lösungsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 $\mu$m bis 20 $\mu$m. Konzentration der Lösungen: 0,2 Gew.-%. Flussrate: 1,0 ml/min, Temperatur der Lösungen: 30°C. Verwendung einer UV- und/oder RI-Detektion.

Die Polycarbonate können in bekannter Weise verzweigt sein, und zwar vorzugsweise durch den Einbau von 0,05 bis 2,0 Mol%, bezogen auf die Summe der eingesetzten Dihydroxyarylverbindungen, an dreifunktionellen oder mehr als dreifunktionellen Verbindungen, beispielsweise solchen mit drei und mehr phenolischen Gruppen. Bevorzugt werden lineare Polycarbonate, weiter bevorzugt lineare Polycarbonate ausschließlich auf Basis von Bisphenol-A eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diolen, Polydiorganosiloxane mit Hydroxyaryloxy-Endgruppen eingesetzt werden. Diese sind bekannt (US 3 419 634) und nach literaturbekannten Verfahren herstellbar. Die Herstellung der polydiorganosiloxanhaltiger Copolycarbonate ist beispielsweise in der DE-A 3 334 782 und WO 2015/052106 A2 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure. Besonders bevorzugt sind Gemische der Disäuredichloride der Isophthalsäure und der Terephthalsäure im Verhältnis zwischen 1:20 und 20:1. Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate aber bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetra-chlorid, 1,4,5,8-Napthalintetracarbon-säuretetrachlorid oder Pyromellithsäuretetrachlorid oder dreioder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4- [4-hydroxyphenyl-isopropyl] - phenoxy)-methan, 1,4-Bis[4,4'-dihydroxytri-phenyl]-methyl]-benzol, in Mengen von 0,01 bis 1,0 Mol% bezogen auf eingesetzte Diphenole verwendet werden. Phenolische Verzweigungsmittel können mit den Diphenolen vorgelegt werden. Säurechlorid-Verzweigungsmittel können zusammen mit den Säuredichloriden eingetragen werden.

In den thermoplastischen, aromatischen Polyestercarbonaten kann der Anteil an Carbonatstruktureinheiten

beliebig variieren. Vorzugsweise beträgt der Anteil an Carbonatgruppen bis zu 99,9 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

In Frage kommende Polyester sind in bevorzugter Ausführungsform aromatisch, weiter bevorzugt handelt es sich um Polyalkylenterephthalate. Es handelt sich hierbei in besonders bevorzugter Ausführungsform um Reaktionsprodukte aus aromatischen Dicarbonsäuren oder ihren reaktionsfähigen Derivaten, wie Dimethylester oder Anhydride, und aliphatischen, cycloaliphatischen oder araliphatischen Diolen sowie Mischungen dieser Reaktionsprodukte.

Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten aromatischen Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten aromatischen Polyalkylenterephthalate können neben Ethylenglykol bzw. Butandiol-1,4-Resten bis zu 20 mol-%, vorzugsweise bis zu 10 mol-%, andere aliphatische Diole mit 3 bis 12 C Atomen oder cycloaliphatische Diole mit 6 bis 21 C Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Besonders bevorzugt sind aromatische Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen von aromatischen Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

Besonders bevorzugt wird als Komponente A ein Polycarbonat, weiter bevorzugt ein aromatisches Polycarbonat, besonders bevorzugt ein aromatisches Polycarbonat enthaltend Struktureinheiten abgeleitet von Bisphenol-A und am meisten bevorzugt ein aromatisches Polycarbonat basierend ausschließlich auf Bisphenol-A als Diol-Komponente eingesetzt.

Komponente B

Als Komponente B wird erfindungsgemäß mindestens ein zweites Polymer eingesetzt ausgewählt aus der Gruppe bestehend aus OH- und/oder COOH-funktionalisierten Vinyl(co)polymeren, Olefin(co)polymeren und (Organo) Polysiloxanen.

Erfindungsgemäß als Komponente B geeignete Polymere enthalten die Hydroxyl-Gruppen (OH) oder Carboxyl-Gruppen (COOH) bevorzugt endständig. Es handelt sich um aliphatische oder aromatische (phenolische) OH-Gruppen oder COOH-Gruppen, das heißt um OH- oder COOH-Gruppen, die an einen aliphatischen Rest oder unmittelbar an einen aromatischen Ring gebunden sind. Die Polymere gemäß Komponente B sind bevorzugt mono- oder bifunktionell OH- bzw. COOH-funktionalisiert, besonders bevorzugt handelt es sich um endständig mono- (α-) oder endständig bifunktionell (α,ω)-funktionalisierte Polymere, besonders bevorzugt um endständig bifunktionell (α,ω)-funktionalisierte Polymere.

Bei den erfindungsgemäßen funktionelle Gruppen enthaltenden Vinyl(co)polymeren handelt es sich bevorzugt um (Co)Polymerisate von mindestens einem Monomeren aus der Gruppe der (Meth)-Acrylsäure-($C_1$ bis $C_8$)-Alkylester (wie beispielsweise Methylmethacrylat, n-Butylacrylat, tert.-Butylacrylat), ungesättigte Carbonsäuren und Carbonsäureanhydride, Vinylaromaten (wie beispielsweise Styrol, α-Methylstyrol), Vinylcyaniden (ungesättigte Nitrile wie beispielsweise Acrylnitril und Methacrylnitril) mit weiteren Vinylmonomeren enthaltend Hydroxy- oder Carboxygruppen.

Geeignete Vinylmonomere enthaltend Hydroxy- oder Carboxygruppen (d.h. -OH oder COOH-Gruppen) sind beispielsweise Acrylsäure, Allylalkohol, Methacrylsäure, Maleinsäure, 2-Hydroxystyrol, 3-Hydroxystyrol, 4-Hydroxystyrol, 2-Vinylbenzoesäure, 3-Vinylbenzoesäure, 4-Vinylbenzoesäure, 2-Allylbenzoesäure, 3-Allylbenzoesäure, 4-Allylbenzoesäure, 2-Butensäure, Crotonsäure, Isocrotonsäure, *cis*-3-Pentensäure, *trans*-3-Pentensäure, 4-Pentensäure und 10-Undecylensäure.

Diese (Co)Polymere sind harzartig und kautschukfrei. Derartige (Co)Polymere sind bekannt und lassen sich

durch radikalische Polymerisation, insbesondere durch Emulsions-, Suspensions-, Lösungs- oder Massepolymerisation herstellen. Ebenso ist eine Herstellung über anionische Polymerisation möglich.

Der Gehalt an funktionelle Gruppen enthaltenden Monomeren in den Vinyl(co)polymeren und den Olefin(co) polymeren liegt bevorzugt bei 0,1 bis 10 Gew.-%, weiter bevorzugt bei 0,2 bis 7 Gew.-%, besonders bevorzugt bei 0,5 bis 5 Gew.-%.

Bevorzugt kommt als Komponente B mindestens ein Olefin(co)polymer zum Einsatz, welches entweder aufgebaut ist aus Struktureinheiten abgeleitet von einer chemisch strukturell einheitlichen Art oder von mehreren strukturell unterschiedlichen Arten von olefinischen Monomerbausteinen oder welches aufgebaut ist aus Struktureinheiten abgeleitet von mindestens einer Art von olefinischen Monomerbausteinen und Struktureinheiten abgeleitet von mindestens einer Art von mit solchen olefinischen Monomerbausteinen copolymerisierbaren nicht olefinischen Monomerbausteinen.

Als mit den olefinischen Monomerbausteinen copolymerisierbare, nicht olefinische Monomerbausteine eignen sich beispielsweise und bevorzugt Vinylmonomere, wie sie zuvor bezüglich des Aufbaus der als Komponente B ebenfalls in Frage kommenden Vinyl(co)polymere offenbart sind. Insbesondere eignen sich als copolymerisierbare Monomerbausteine (Meth)-Acrylsäure-($C_1$ bis $C_8$)-Alkylester (wie beispielsweise Methylmethacrylat, Methacrylat, n-Butylacrylat, tert.-Butylacrylat), ungesättigte Carbonsäuren (wie beispielsweise (Meth)Acrylsäure) und Carbonsäureanhydride (wie beispielsweise Maleinsäureanhydrid).

Die OH- oder COOH-Funktionen können beispielsweise durch Copolymerisation mit Vinylmonomeren enthaltend Hydroxy- oder Carboxygruppen (d.h. -OH oder COOH-Gruppen) wie sie zuvor offenbart wurden, in das Olefin(co) polymer eingebracht werden.

Endständige OH- oder COOH-Funktionen können in die Polymere gemäß Komponente B bei deren Herstellung im radikalischen Polymerisationsverfahren durch Verwendung entsprechend funktionalisierter Radikalstarter, Kettenabbrecher bzw. Molekulargewichtsregler hergestellt werden. Als hierfür geeignete Molekulargewichtsregler kommen beispielsweise und bevorzugt OH- oder COOH-funktionalisierte Thiole, beispielsweise Mercaptoethanol, 3-Mercapto-1-propanol, 1-Mercapto-2-propanol oder 6-Mercapto-1-hexanol bzw. Mercaptoessigsäure, 3-Mercaptoprionsäure oder 6-Mercaptohexansäure zum Einsatz. Als Kettenstarter kann beispielsweise 2,2'-Azobis(2-methylpropionitril) (AIBN) zum Einsatz kommen. Dabei entstehen zunächst endständige NitrilGruppen, welche unter stark sauren Bedingungen zu Carboxy-Gruppen hydrolisiert werden. Letztere können in einem nachgeschalteten Reaktionsschritt nach einem dem Fachmann bekannten Verfahren katalytisch zu Hydroxylgruppen reduziert werden.

Besonders bevorzugt kommt als Komponente B ein Olefin(co)polymer zum Einsatz, welches ausschließlich aufgebaut ist aus Struktureinheiten abgeleitet von olefinischen Monomerbausteinen.

Als olefinische Monomerbausteine zur Herstellung der Olefin(co)polymere kommen bevorzugt einfach ungesättigte, acylische oder cyklische $C_1$- bis Cs-Olefine, beispielsweise Ethen, Propen, Buten, Isobuten, n-Penten, 4-Methyl-1-Penten, n-Hexen, n-Okten und Cyclohexen zum Einsatz.

Ebenfalls lassen sich die als Komponente B in Frage kommenden Olefin(co)polymere durch Polymerisation von zwei- oder mehrfach ungesättigten Olefinen oder von Mischungen solcher zweioder mehrfach ungesättigten Olefine mit einfach ungesättigten Olefinen und nachgeschalteter katalytischer Hydrierung der nicht in der Polymerisationsreaktion umgesetzten überschüssigen Doppelbindungen erhalten. Als zweifach ungesättigte Olefine kommen hierbei beispielsweise und bevorzugt 1,2-Butadien oder 1,3-Butadien oder Mischungen dieser Butadien-Isomere zum Einsatz.

Die Herstellung von doppelt endständig (d.h. $\alpha,\omega$-ständig) OH- oder COOH-funktionalisierten Olefin(co)polymeren ist dem Fachmann bekannt.

US 5,393,843 beschreibt im Beispiel 1 beispielsweise die Herstellung von $\alpha,\omega$-ständig OH-funktionalisierten Butadien-Polymeren über ein Verfahren bestehend aus den folgenden Schritten:

(i) Herstellung einer als bifunktioneller anionischer Kettenstarter geeigneten Dilithiumverbindung (sBuLi - Y - sBuLi) durch Reaktion eines mindestens doppelten stöchiometrischen Überschusses an sekundärem Butyl-Lithium (sBuLi) mit einem Diolefin (Y), beispielsweise m-Diisopropenylbenzol,

(ii) Anionische Kettenpolymerisation von 1,3-Butadien (B) gestartet durch die in Schritt (i) hergestellte Dilithiumverbindung unter Ausbildung eines $\alpha,\omega$-ständig sBuLi-terminierten Polybutadiens (sBuLi - $B_n$ - Y - $B_m$ - sBuLi),

(iii) Reaktion des in Schritt (ii) hergestellten $\alpha,\omega$-ständig sBuLi-terminierten Polybutadiens mit Ethylenoxid, wobei beidseitig endständig -CHzCHz-O- Struktureinheiten insertiert werden unter Ausbildung eines $\alpha,\omega$-ständig alkoxid-sBuLi-terminierten Polymers der allgemeinen Struktur sBuLi - O-$CH_2CH_2$ - $B_n$ - Y - $B_m$ - CHzCHz-O - sBuLi,

(iv) Behandlung des in Schritt (iii) entstandenen Produktes mit Methanol unter Ausbildung eines $\alpha,\omega$-ständig OH-terminierten Polybutadiendiols mit der allgemeinen Struktur HO - $CH_2CH_2$ - B, - Y - B. - $CH_2CH_2$ - OH unter Abspaltung und Ausfällung von Lithiummethanolat und Freisetzung von Isobuten,

(v) optional, sofern ein gesättigtes $\alpha,\omega$-ständig OH-terminierten Polybutadiendiol angestrebt wird, gefolgt von einer katalytischen Hochdruckhydrierung der Doppelbindungen im Produkt aus Schritt (iv) mit einem Ni/Al-Katalysator.

Die Herstellung von $\alpha,\omega$-ständig COOH-funktionalisierten Olefin(co)polymeren wird in der US 5,393,843 ebenfalls im Beispiel 8 offenbart. Dafür wird in dem zuvor beschriebenen Verfahren das im Schritt (ii) gebildete $\alpha,\omega$-ständig sBuLi-terminierte Polybutadien carboxyliert, indem es in einem Schritt (iii-b) in organischer Lösung durch einen Rohrreaktor gepumpt wird, wobei die Lösung in einem statischen Mischer bei hohem Druck mit Kohlendioxid in Kontakt und zur Reaktion gebracht wird. Die Schritte (iii) und (iv) entfallen. Das im Schritt (iii-b) erhaltene Polymer kann optional gemäß Schritt (v) hydriert werden. Dafür ist es erforderlich, eine erhöhte Katalysatormenge einzusetzen, um die durch die Carboxylendgruppen im Produkt aus Schritt (iii-b) reduzierte diesbezügliche Aktivität zu kompensieren. Bevorzugt erfolgt die Hydrierung gemäß Schritt (v) stattdessen aber nach einer zwischengeschalteten sauer katalysierten Veresterung (Schritt iv-b) der Carboxylendgruppen im Produkt resultierend aus Schritt (iii-b) mit Methanol gemäß dem in US 5,002,676 offenbarten Verfahren. Nach der Hydrierung gemäß Schritt (v) werden die Estergruppen dann zu Carboxyl-Gruppen durch Waschen mit wässriger Schwefelsäure rückgespalten, wobei gleichzeitig auch der Hydrierungskatalysator entfernt wird.

Das Molekulargewicht des $\alpha,\omega$-ständig OH- oder COOH-funktionalisierten Olefin(co)polymers lässt sich einstellen über die Variation des molaren Verhältnisses aus Dilithiumverbindung und 1,3-Butadien in Schritt (ii).

Wird in Schritt (i) des in US 5,393,843 offenbarten Verfahren statt einer Dilithiumverbindung eine Monolithiumverbindung, beispielsweise sekundäres Butyl-Lithium als monofunktioneller anionischer Kettenstarter verwendet, so resultiert in dem Verfahren ein einfach endständig OH- oder COOH-funktionalisiertes Olefin(co)polymer.

Das in US 5,393,843 offenbarte Verfahren eignet sich auch zur Herstellung endständig OH- oder COOH-funktionalisierter Vinyl(co)polymere, indem im Schritt (ii) statt Butadien ein Vinylmonomer oder eine Mischung von verschiedenen Vinylmonomeren eingesetzt wird und auf den Schritt (v) verzichtet wird.

Die Herstellung der bifunktionellen anionischen Kettenstarter gemäß Schritt (i) ist dem Fachmann ebenfalls wohl bekannt und in der wissenschaftlichen Literatur beispielsweise beschrieben in P. Lutz et al, "An efficient bifunctional lithium-organic initiator to be used in apolar solvents", Polymer, 1982, Vol. 23, 1953-1959, F. Bandermann et al, "Bifunctional anionic initiators: A critical study and overview", Makromol. Chem. 186 (1985), 2017-2024 und G. Beinert et al, "A bifunctional anionic initiator soluble in non-polar solvents", Makromol. Chem. 179 (1978), 551-555.

Die Herstellung von endständig phenolisch OH-funktionalisierten Olefin(co)polymeren wird beispielsweise beschrieben in WO 2017/189223 A1.

Die Olefin(co)polymere können teilkristallin oder amorph sowie und linear oder verzweigt sein. Die Herstellung von Olefin(co)polymeren ist dem Fachmann seit langem bekannt. Die erfindungsgemäßen Olefin(co)polymere werden durch Kettenpolymerisation hergestellt.

Als Komponente B geeignete OH- und/oder COOH-funktionalisierte (Organo)polysiloxane enthaltend mindestens eine Struktureinheit der folgenden allgemeinen Struktur (5)

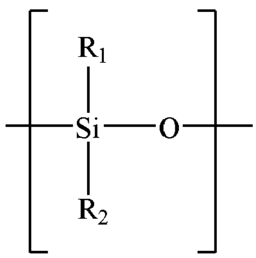

(5),

worin $R_1$ und $R_2$ unabhängig voneinander Wasserstoff oder Kohlenwasserstoffreste, die jeweils substituiert oder unsubstituiert sowie gegebenenfalls durch Heteroatome wie O, N oder Si unterbrochen sowie linear, verzweigt oder cyclisch sein können, bedeuten.

Bevorzugte Kohlenwasserstoff-Reste $R_1$ und $R_2$ sind beispielsweise Alkyl-, Aryl-, Alkylaryl-, Arylalkyl-, oder Cycloalkylgruppen, die jeweils substituiert oder unsubstituiert sowie gegebenenfalls durch Heteroatome unterbrochen sein können. Bevorzugt handelt es sich bei den Resten $R_1$ und $R_2$ um Kohlenwasserstoffreste mit 1 bis 25 Kohlenstoffatomen.

Beispiele für Kohlenwasserstoff-Reste $R_1$ und $R_2$ sind Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, Heptylreste, Octylreste, Nonylreste, Decylreste, Dodecylreste, Octadecylreste, Cycloalkylreste, wie beispielsweise Cyclopentyl-, Cyclohexyl-, Cycloheptylreste und Methylcyclohexylreste; Arylreste, wie beispielsweise Phenyl-, Biphenyl-, Naphtyl- und Anthryl- und Phenanthrylrest; Alkarylreste, wie beispielsweise o-, m-, p-Tolylreste, Xylylreste und Ethylphenylreste; Aralkyl-reste, wie beispielsweise der Benzylrest, der $\alpha$- und der $\beta$-Phenylethylrest.

Als Komponente B geeignete (Oregano)polysiloxane sind beispielsweise und bevorzugt solche gemäß der folgenden Struktur (6), weiter bevorzugt gemäß den Strukturen (7) und (8):

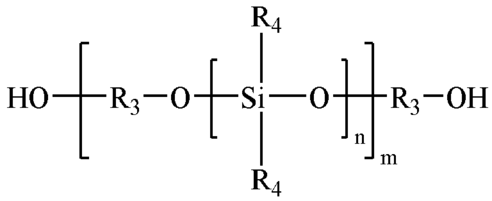

(6)

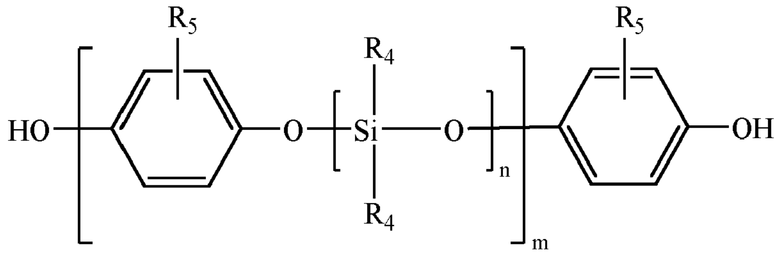

(7)

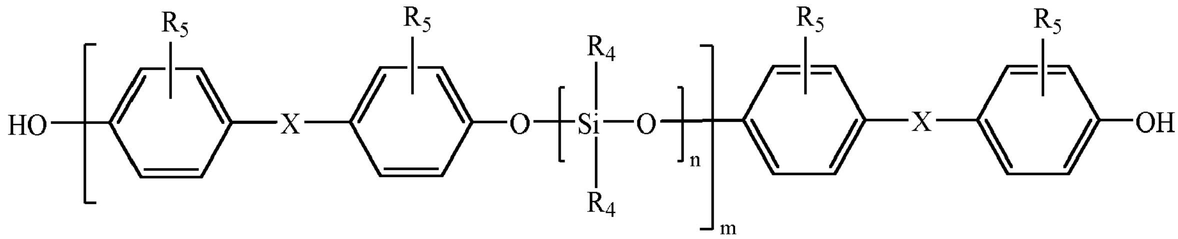

(8)

wobei in den Strukturen (6), (7) und (8)

$R_3$ unabhängig voneinander für, optional mit Halogen oder anderen funktionellen Gruppen funktionalisiertes Arylen, Alkylen oder Aralkylen steht,

$R_4$ unabhängig voneinander für, optional mit Halogen oder anderen funktionellen Gruppen funktionalisiertes Aryl, Alkyl, Aralkyl oder Wasserstoff, bevorzugt für Methyl, steht, wobei mindestens einer der Reste $R_4$ verschieden von Wasserstoff ist,

$R_5$ für Wasserstoff, $C_1$- bis $C_4$-Alkyl, vorzugsweise für Wasserstoff oder Methyl steht und insbesondere bevorzugt für Wasserstoff steht,

X für eine Einfachbindung, -SOz-, -CO-, -O-, -S-, $C_1$- bis $C_6$-Alkylen, $C_2$- bis $C_5$-Alkyliden oder für $C_6$- bis $C_{12}$-Arylen, welches gegebenenfalls mit weiteren Heteroatome enthaltenden aromatischen Ringen kondensiert sein kann, bevorzugt für eine Einfachbindung, $C_1$- bis Cs-Alkylen, $C_2$- bis $C_5$-Alkyliden, $C_5$- bis $C_{12}$-Cycloalkyliden, -O-, -SO- -CO-, -S-, -SOz-, besonders bevorzugt für eine Einfachbindung, Isopropyliden, $C_5$- bis $C_{12}$-Cycloalkyliden oder Sauerstoff, und ganz besonders bevorzugt für Isopropyliden steht,

n eine durchschnittliche Zahl von 10 bis 400, bevorzugt 10 und 100, insbesondere bevorzugt 15 bis 50, jeweils bestimmt durch 1H-NMR Spektroskopie, bedeutet und

m für eine durchschnittliche Zahl von 1 bis 10, bevorzugt von 1 bis 6 und insbesondere bevorzugt von 1,5 bis 5, jeweils bestimmt durch 1H-NMR Spektroskopie steht.

Die Polymere gemäß Komponente B haben mittlere Molekulargewichte (Zahlenmittel $M_n$, gemessen durch GPC(Gelpermeationschromatographie) bei Raumtemperatur gegen Polystyrol als Standard) von bevorzugt 200 bis 50.000 g/mol, besonders bevorzugt 500 bis 20.000 g/mol, noch weiter bevorzugt 800 - 10.000 g/mol, am meisten bevorzugt 1000 bis 5000 g/mol, wobei ein auf die chemische Natur des Polymers B hinsichtlich seiner Polarität geeignet abgestimmtes Lösungsmittel zum Einsatz kommt.

Geeignetes und bevorzugte Lösungsmittel für die als erfindungsgemäße Komponente B geeigneten OH- und/oder COOH-funktionalisierten Vinyl(co)polymere sind beispielsweise Tetrahydrofuran oder Dichlormethan; bevorzugt kommt Tetrahydrofuran zum Einsatz. Geeignete und bevorzugte Lösungsmittel für die als erfindungsgemäße Komponente B geeigneten OH- und/oder COOH-funktionalisierten Olefin(co)polymeren sind beispielsweise und bevorzugt ausgewählt aus der Gruppe der chlorierten aliphatischen oder aromatischen Kohlenwasserstoffen, weiter bevorzugt ausgewählt aus der Gruppe bestehend aus ortho-Dichlorbenzol, 1,2-Dichlorethan, Dichlormethan oder Chloroform. Eine

ausreichende Löslichkeit erfordert hier oft eine erhöhte Temperatur beispielsweise 40°C, 60°C, 80°C, 100°C oder 120°C. In diesem Fall wird die GPC bei der Temperatur durchgeführt, die zur Erzielung einer für die GPC ausreichenden Löslichkeit erforderlich ist. Erfordert das Olefin(co)polymere zur Erzielung einer für die GPC ausreichenden Löslichkeit eine Temperatur oberhalb von 40°C, so kommt bevorzugt ortho-Dichlorbenzol als Lösungsmittel zum Einsatz. Ein geeignetes und bevorzugtes Lösungsmittel für die als erfindungsgemäße Komponente B geeigneten OH- und/oder COOH-funktionalisierten (Organo)Polysiloxanpolymere ist Dichlormethan.

In den genannten Vorzugsbereichen für die mittleren Molekulargewichte der Komponente B zeigt sich eine zunehmend vorteilhafte Balance aus Beweglichkeit der Polymerketten, was die Mischbarkeit mit dem Polymer A verbessert und aus einer Mindestblöcklänge, um die Wirkung als beispielsweise Verträglichkeitsvermittler in Polymerblends aus den Polymeren A und B zu verbessern.

In einer bevorzugten Ausführungsform sind die OH- und/oder COOH-Funktionen im Polymer B jeweils entweder über Methylengruppen $-CH_2-$ oder über einen aromatischen Ring mit dem polymeren Rückgrat oder mit Seitenketten oder Seitengruppen des polymeren Rückgrats des Polymers B verknüpft.

In einer weiter bevorzugten Ausführungsform sind die OH- und/oder COOH-Funktionen im Polymer B jeweils primär ausgebildet, also im Polymer B über Methylengruppen $-CH_2-$ mit dem polymeren Rückgrat oder mit Seitenketten oder Seitengruppen des polymeren Rückgrats des Polymers B verknüpft.

**Komponente C**

Als Komponente C wird bei dem erfindungsgemäßen Verfahren mindestens ein Übergangsmetall-Carboxylat-Salz enthaltend ein Übergangsmetallkation $M^{n+}$, wobei n für eine ganze Zahl zwischen 1 und 4 steht, und ein Carboxylatanion einer ein- oder mehrwertigen Carbonsäure, eingesetzt.

Bevorzugt steht n für eine ganze Zahl zwischen 1 und 3, weiter bevorzugt zwischen 2 und 3 und am meisten bevorzugt steht n für 2.

Bevorzugt handelt es sich bei der Carbonsäure um eine aliphatische oder aromatische, besonders bevorzugt um eine aliphatische Carbonsäure. Weiter bevorzugt handelt es sich um eine gesättigte Carbonsäure.

Das Übergangsmetall M ist bevorzugt ausgewählt aus der Gruppe bestehend aus Titan, Mangan, Eisen, Cobalt, Nickel, Zink, Kupfer, Palladium, Platin, Zirkonium, Molybden, Niobden, Ruthenium, Rhodium, Iridium und Vanadium, weiter bevorzugt ist M ausgewällt aus der Gruppe bestehend aus Zink, Mangan, Vanadium, Cobalt und Nickel.

Am meisten bevorzugt handelt es sich bei dem Umgangsmetall um Zink und bei dem Übergangsmetallkation um $Zn^{2+}$.

Als Anion enthält das Salz ein Carboxylat-Anion, welches durch einfache oder mehrfache Deprotonierung einer Carbonsäure hervorgeht. Dabei handelt es sich bevorzugt um eine Monocarbonsäure, Dicarbonsäure, Tricarbonsäure oder Tetracarbonsäure. Bevorzugt sind Monocarbonsäuren und Dicarbonsäuren, besonders bevorzugt sind Monocarbonsäuren.

Als Carbonsäure geeignet sind beispielsweise Ameisensäure, Essigsäure, Prionsäure, Buttersäure, Valeriansäure, Capronsäure, Bernsteinsäure, Caprylsäure, Laurinsäure, Palmitinsäure, 2-Ethylhexansäure, Benzoesäure, Phenylessigsäure, Oxalsäure, Malonsäure, Fumarsäure, Stearinsäure, Ölsäure, Maleinsäure, Citronensäure, Glutarsäure, Adipinsäure, Sebacinsäure und Azelainsäure.

Bevorzugt ist die Carbonsäure eine einwertige, gesättigte, aliphatische $C_1$- bis $C_{18}$-Carbonsäure.

Am meisten bevorzugt handelt es sich bei der Komponente C um Zinkacetat.

**Komponente D**

Als Komponente D können optional ein oder mehrere Polymeradditive und/oder Prozesshilfsstoffe und/oder weitere polymere Komponenten in der im erfindungsgemäßen Verfahren eingesetzten Zusammensetzung enthalten sein, bevorzugt ausgewählt aus der Gruppe bestehend aus Flammschutzmitteln, Antidrippingmitteln, Flammschutzsynergisten, Rauchinhibitoren, Gleit- und Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern und Dispergierhilfsmitteln, von den Komponenten A und B verschiedene polymere Blendpartner wie kautschukmodifizierte Pfropfpolymere, Füll- und Verstärkungsstoffe sowie Farbstoffen und Pigmenten.

Der Zusatz der Komponente D dient entweder einer verbesserten Verfahrensführung, z.B. der thermischen Stabilisierung der Polymere A und/oder B während der thermischen Belastung im erfindungsgemäßen Verfahren mit dem Ziel des Erhalts ihrer polymeren Integrität oder der Reduktion der Grenzflächenspannung zwischen den Polymeren A und B während des Verfahrens mit dem Ziel einer verbesserten Dispergierbarkeit und somit Vergrößerung der reaktiven Phasengrenzfläche. In diesem Fall spricht man von Prozesshilfsstoffen. Andererseits können im erfindungsgemäßen Verfahren als Komponente D aber auch Bestandteile zugesetzt werden, die der Eigenschaftsmodifizierung des Verfahrensproduktes des erfindungsgemäßen Verfahrens dienen, beispielsweise Schlagzähmodifikatoren, Verstärkungsstoffe, Flammschutzmittel, UV-Stabilisatoren, Fließfähigkeitspromotoren, Farbstoffe und Pigmente. In diesem Fall spricht man von Polymeradditiven. Alternativ können derartige Polymeradditive aber auch in einem nachgeschalteten Compoundierungsschritt dem Produkt des erfindungsgemäßen Verfahrens zugesetzt werden. Dies kann insbesondere dann vorteilhaft sein, wenn die Polymeradditive oder darin enthaltende, aus deren Herstellung bedingte Verunreinigungen die thermische Stabilität der Polymere A und/oder B oder des daraus resultierenden Blockcopolymers negativ beeinflussen.

**Verfahren zur Herstellung des Blockcopolymers und der Formmasse**

Aus den Bestandteilen (Komponenten) der Zusammensetzung, also den Komponenten A bis C und optional D, können in dem erfindungsgemäßen Verfahren Blockcopolymere und Blockcopolymer enthaltende Formmassen hergestellt werden. Die Blockcopolymer enthaltenden Formmassen sind im Allgemeinen thermoplastisch.

Die erfindungsgemäßen Blockcopolymere werden hergestellt, indem die Komponenten durch Einbringung mechanischer und/oder thermische Energie aufgeschmolzen, gemischt und ineinander dispergiert werden. Dies kann beispielsweise bei Temperaturen von 220°C bis 330°C, bevorzugt 240 bis 320°C, besonders bevorzugt 260 bis 310°C durchgeführt werden.

Das erfindungsgemäße Verfahren zur Herstellung der Blockcopolymere kann mit folgenden Teilschritten beschrieben werden

(i) Aufschmelzen der Bestandteile der Zusammensetzung durch Einbringen thermischer Energie und/oder mechanischer Scherung,
(ii) Vermischen und Dispergieren der verschiedenen Komponenten der Zusammensetzung mit- bzw. ineinander,
(iii) Verfestigen der Schmelze durch Abkühlen,
(iv) Granulieren.

Die Schritte (iii) und (iv) können in beliebiger Reihenfolge durchgeführt werden,
Die Verweilzeit der Komponenten bei den oben genannten Temperaturen liegt bevorzugt in einem Bereich von 15 Sekunden bis 30 Minuten, weiter bevorzugt 30 Sekunden bis 20 Minuten, besonders bevorzugt 60 Sekunden bis 15 Minuten.

Das Vermischen kann in üblichen Aggregaten geschehen, wie beispielsweise in Einwellenextrudern, Doppelwellenextrudern, Planetwalzenextrudern, Disk-Cage-Reaktoren, Innenknetern, kontinuierlichen oder diskontinuierlichen Co-Knetern sowie Filmtrudern. Bevorzugt werden Doppelwellenextruder, Innenkneter, kontinuierliche oder diskontinuierliche Co-Kneter oder Filmtruder eingesetzt und dabei die Schmelzetemperatur in einem Bereich von bevorzugt 240 bis 320°C eingestellt.

Besonders bevorzugt wird die Reaktion in einem Doppelwellenextruder oder Filmtruder ausgeführt.

In den genannten Aggregaten werden die Zusammensetzungen schmelzecompoundiert oder schmelzextrudiert. Bei der Schmelzecompoundierung reagieren die Komponenten A und B in Anwesenheit der Komponente C zumindest teilweise zu einem Blockcopolymer. Insofern wird im Rahmen dieser Anmeldung dieser Prozess auch als Reaktivextrusion oder Reaktivcompoundierung bezeichnet.

Nach Schritt ii) kann auch ein Entgasen der vorliegenden Schmelzezusammensetzung durch Anlegen eines Unterdrucks erfolgen. Als Absolutdruck wird bevorzugt ein Druck von maximal 400 mbar, weiter bevorzugt von maximal 200 mbar, weiter bevorzugt von maximal 50 mbar, besonders bevorzugt von maximal 5 mbar eingestellt. Die Entgasung kann einstufig oder mehrstufig, im letzteren Fall bevorzugt mit kaskadisch reduzierten Absolutdrücken, beispielsweise und bevorzugt mit bevorzugt maximal 200 mbar im ersten Entgasungsschritt und mit bevorzugt maximal 5 mbar in dem zweiten und gegebenenfalls weiteren folgenden Entgasungsschritten erfolgen. Dabei dient die erste Entgasungszone bei einem Absolutdruck von bevorzugt maximal 200 mbar dem Entfernen von Restfeuchte und weiteren leicht flüchtigen Bestandteilen (Restmonomeren oder Restlösungsmittel) aus der Polymerschmelze der Komponenten A und B. Die Entgasung im Hochvakuum bei bevorzugt maximal 5 mbar dient der Entfernung von Hochsiedern, insbesondere Phenol, aus der Schmelzemischung mit dem Ziel der Gleichgewichtsverschiebung der Polykondensationsreaktion hin zu einem Aufbau von Molekulargewicht der Komponente A bzw. der von A abgeleiteten endständigen Blöcke in dem im erfindungsgemäßen Verfahren entstehenden Blockcopolymer.

Unter einer erfindungsgemäßen Formmasse wird ein Produkt verstanden, das neben dem erfindungsgemäßen Blockcopolymer weitere Polymere und/oder Polymeradditive enthält. Eine solche erfindungsgemäße Formmasse kann aus einer Zusammensetzung bestehend aus den Komponenten A bis C erhalten werden, indem das erfindungsgemäße Verfahren zur Herstellung des Blockcopolymers durchgeführt wird und die Komponenten A und/oder B nicht vollständig zum Blockcopolymer umgesetzt werden. Das kann beispielsweise der Fall sein, wenn entweder eine der Komponenten im Überschuss eingesetzt wird und/oder wenn die Reaktionszeit, d.h. die Verweilzeit in der Schmelze nicht ausreicht, um eine vollständige Umsetzung zu erreichen. Weiterhin kann eine solche erfindungsgemäße Formmasse (bzw. Zusammensetzung) erhalten werden, indem im erfindungsgemäßen Verfahren neben den Komponenten A bis C auch die Komponente D zum Einsatz kommt oder in einem zweistufigen Verfahren, in dem im ersten Verfahrensschritt gemäß dem erfindungsgemäßen Reaktivcompoundierungs-Verfahren zunächst aus den Komponenten A bis C ein Blockcopolymer oder eine Blockcopolymer enthaltende Zusammensetzung hergestellt wird und in einem zweiten Compoundierungsschritt dem derart erhaltenen Verfahrensprodukt eine oder mehrere Komponenten D und/oder weitere Anteile der Komponenten A und/oder B zugesetzt werden.

Im Folgenden werden weitere Ausführungsformen der vorliegenden Erfindung aufgeführt.

1. Verfahren zur Herstellung eines Blockcopolymers, in dem eine Zusammensetzung enthaltend

   A) mindestens einen Vertreter ausgewählt aus der Gruppe bestehend aus Polycarbonaten, Polyestern und Polyestercarbonaten,
   B) mindestens ein zweites Polymer ausgewählt aus der Gruppe bestehend aus jeweils OH-und/oder COOH-funktionalisierten Vinyl(co)polymeren, Olefin(co)polymeren und (Organo)Polysiloxanen,
   C) mindestens ein Übergangsmetall-Carboxylat-Salz enthaltend ein Übergangsmetallkation $M^{n+}$, wobei n für eine ganze Zahl zwischen 1 und 4 steht, und ein Carboxylatanion einer ein- oder mehrwertigen Carbonsäure,

   wobei Komponente C in einer Menge von mindestens 0,01 Gew.-Teilen, bezogen auf in Summe 100 Gewichtsteile der Komponenten A und B, zum Einsatz kommt,
   durch Einbringung mechanischer und/oder thermischer Energie aufgeschmolzen, die Komponenten der Zusammensetzung gemischt und ineinander dispergiert
   und die Komponenten A und B in der Schmelzedispersion der Komponenten zumindest teilweise zu dem Blockcopolymer umgesetzt werden.

2. Verfahren gemäß Ausführungsform 1, dadurch gekennzeichnet, dass es sich bei Komponente A um ein Polycarbonat handelt.
3. Verfahren gemäß Ausführungsform 2, wobei die Komponente A Struktureinheiten abgeleitet von mindestens einem aromatischen Diol in einem Anteil von mindestens 50 Mol.-%, bezogen auf in Summe 100 Mol.-% der von aromatischen und optional aliphatischen Diolen abgeleiteten Struktureinheiten in Komponente A, enthält.
4. Verfahren gemäß einer der vorhergehenden Ausführungsformen, dadurch gekennzeichnet, dass Polymer B $\alpha$-ständig oder $\alpha,\omega$-ständig mit OH- und/oder COOH-Gruppen funktionalisiert ist.
5. Verfahren gemäß einer der vorhergehenden Ausführungsformen, dadurch gekennzeichnet, dass Polymer B ausschließlich $\alpha,\omega$-ständig mit OH-Gruppen funktionalisiert ist.
6. Verfahren gemäß einer der vorhergehenden Ausführungsformen, dadurch gekennzeichnet, dass die OH- und/oder COOH-Funktionen im Polymer B jeweils entweder über Methylengruppen $-CH_2-$ oder über einen aromatischen Ring mit dem polymeren Rückgrat oder mit Seitenketten oder Seitengruppen des polymeren Rückgrats des Polymers B verknüpft sind.
7. Verfahren gemäß einer der vorhergehenden Ausführungsformen, dadurch gekennzeichnet, dass die OH- und/oder COOH-Funktionen im Polymer B jeweils über Methylengruppen $-CH_2-$ mit dem polymeren Rückgrat oder mit Seitenketten oder Seitengruppen des polymeren Rückgrats des Polymers B verknüpft sind.
8. Verfahren gemäß einer der vorhergehenden Ausführungsformen, dadurch gekennzeichnet, dass Komponente B ein Olefin(co)polymer ist,

   welches entweder aufgebaut ist aus Struktureinheiten abgeleitet von einer chemisch strukturell einheitlichen Art oder von mehreren strukturell unterschiedlichen Arten von olefinischen Monomerbausteinen oder
   welches aufgebaut ist aus Struktureinheiten abgeleitet von mindestens einer Art von olefinischen Monomerbausteinen und Struktureinheiten abgeleitet von mindestens einer Art von mit solchen olefinischen Monomerbausteinen copolymerisierbaren nicht olefinischen Monomerbausteinen.

9. Verfahren gemäß einer der vorhergehenden Ausführungsformen, dadurch gekennzeichnet, dass Komponente B ein Olefin(co)polymer ist, welches ausschließlich aufgebaut ist aus Struktureinheiten abgeleitet von olefinischen Monomerbausteinen.
10. Verfahren gemäß einer der vorhergehenden Ausführungsformen, dadurch gekennzeichnet, dass Komponente B ein mittleres Molekulargewicht (Zahlenmittel $M_n$, gemessen durch GPC(Gelpermeationschromatographie) bei Raumtemperatur gegen Polystyrol als Standard) von 800 bis 10.000 g/mol aufweist.
11. Verfahren gemäß einer der vorhergehenden Ausführungsformen, dadurch gekennzeichnet, dass bei Komponente C n für 2 oder 3 steht.
12. Verfahren gemäß einer der vorhergehenden Ausführungsformen, dadurch gekennzeichnet, dass in Komponente

C das Übergangsmetallkation $Zn^{2+}$ ist.

13. Verfahren gemäß einer der vorhergehenden Ausführungsformen, dadurch gekennzeichnet, dass in Komponente C das Carboxylatanion von einer ein- oder mehrwertigen aliphatischen Carbonsäure abgeleitet ist.

14. Verfahren gemäß einer der vorhergehenden Ausführungsformen, dadurch gekennzeichnet, dass Komponente C in einer Menge, bezogen auf in Summe 100 Gew.-Teile der Komponenten A und B, von 0,02 bis 1,0 Gew.-Teilen zum Einsatz kommt.

15. Verfahren gemäß einer der vorhergehenden Ausführungsformen, dadurch gekennzeichnet, dass Komponente C in einer Menge, bezogen auf in Summe 100 Gew.-Teile der Komponenten A und B, von 0,03 bis 0,1 Gew.-Teilen zum Einsatz kommt.

16. Verfahren gemäß einer der vorhergehenden Ausführungsformen, dadurch gekennzeichnet, dass das Verfahren in einem Verfahrensaggregat ausgewählt aus der Gruppe bestehend aus Doppelwellenextrudern, Innenknetern, kontinuierlichen oder diskontinuierlichen Co-Knetern, und Filmtrudern ausgeführt wird,
wobei die Schmelzetemperatur im Bereich von 240 bis 320°C liegt.

17. Verfahren gemäß einer der vorhergehenden Ausführungsformen, dadurch gekennzeichnet, dass die Komponente B, bezogen auf in Summe 100 Gew.-Teile der Komponenten A und B, in einer Menge von 3 bis 25 Gew.-Teilen zum Einsatz kommt.

18.Verfahren gemäß einer der vorhergehenden Ausführungsformen, dadurch gekennzeichnet, dass die Komponente B, bezogen auf in Summe 100 Gew.-Teile der Komponenten A und B, in einer Menge von 7 bis 15 Gew.-Teilen zum Einsatz kommt.

19. Blockcopolymer enthaltend Blöcke A*, abgeleitet von mindestens einem Polymer A, und Blöcke B*, abgeleitet von mindestens einem Polymer B,

wobei Polymer A mindestens ein Polycarbonat und Polymer B mindestens ein Polymer ausgewählt aus der Gruppe bestehend aus jeweils OH- und/oder COOH-funktionalisierten Vinyl(co)polymeren, Olefin(co)polymeren und (Organo)Polysiloxanen ist,
dadurch gekennzeichnet, dass das Blockcopolymer Struktureinheiten gemäß Formeln x und y enthält

$$\text{-A*-O-C(O)-(O)}_n\text{-B*-} \qquad (x)$$

$$\text{-B*-(O)}_o\text{-C(O)-(O)}_p\text{-B*-} \qquad (y)$$

wobei n, o und p unabhängig voneinander 0 oder 1 bedeuten,
wobei -C(O)- für eine Carbonylgruppe steht,
dadurch gekennzeichnet, dass die Struktureinheiten gemäß Formel x in dem Blockcopolymer in einem molaren Anteil von 60 bis <85 mol%, bezogen auf in Summe 100 mol% Struktureinheiten gemäß Formeln x und y, vorliegen.

20. Blockcopolymer gemäß Ausführungsform 19, dadurch gekennzeichnet, dass n, o und p alle denselben Wert, also alle entweder den Wert 0 oder den Wert 1, aufweisen.

21. Blockcopolymer gemäß einer der Ausführungsformen 19 oder 20, dadurch gekennzeichnet, dass die OH- und/oder COOH-Funktionen im Polymer B entweder über Methylengruppen $-CH_2-$ oder über einen aromatischen Ring mit dem polymeren Rückgrat oder mit Seitenketten oder Seitengruppen des polymeren Rückgrats des Polymers B verknüpft sind.

22. Blockcopolymer gemäß einer der Ausführungsformen 19 bis 21, wobei n, o und p alle den Wert 1 aufweisen.

23. Blockcopolymer gemäß einer der Ausführungsformen 19 bis 22, wobei das Blockcopolymer zusätzlich Struktureinheiten gemäß mindestens einer der Strukturen z1, z2 und z3 enthält

$$\text{-A*-O-C(O)-O-C(O)-B*-} \qquad (z1)$$

$$\text{-B*-C(O)-O-C(O)-O-C(O)-B*-} \qquad (z2)$$

$$\text{-B*-(O)}_o\text{-C(O)-O-C(O)-B*-} \qquad (z3),$$

wobei o gleich 0 oder 1 sein kann.

24. Blockcopolymer gemäß einer der Ausführungsformen 19 bis 23, dadurch gekennzeichnet, dass das Polymer B ein Olefin(co)polymer ist,

welches entweder aufgebaut ist aus Struktureinheiten abgeleitet von einer chemisch strukturell einheitlichen Art

oder von mehreren strukturell unterschiedlichen Arten von olefinischen Monomerbausteinen oder welches aufgebaut ist aus Struktureinheiten abgeleitet von mindestens einer Art von olefinischen Monomerbausteinen und Struktureinheiten abgeleitet von mindestens einer Art von mit solchen olefinischen Monomerbausteinen copolymerisierbaren nicht olefinischen Monomerbausteinen.

25. Blockcopolymer gemäß einer der Ausführungsformen 19 bis 24, dadurch gekennzeichnet, dass Polymer B ein Olefinpolymer ist, welches ausschließlich aufgebaut ist aus Struktureinheiten abgeleitet von olefinischen Monomerbausteinen.
26. Thermoplastische Formmasse enthaltend ein Blockcopolymer gemäß einer der Ausführungsformen 19 bis 25.
27. Formteil enthaltend ein Blockcopolymer gemäß einer der Ausführungsformen 19 bis 25.

## Beispiele

Komponente A.1

Lineares Polycarbonat auf Basis Bisphenol-A, hergestellt im Phasengrenzflächenpolymerisationsverfahren, mit einem gewichtsgemittelten Molekulargewicht $M_w$ von 32.000 g/mol (bestimmt bei Raumtemperatur durch GPC in Methylenchlorid gegen einen BPA-PC-Standard). Komponente A kam in Pulverform zum Einsatz.

Komponente A.2

Lineares Polycarbonat auf Basis Bisphenol-A, hergestellt im Phasengrenzflächenpolymerisationsverfahren, mit einem gewichtsgemittelten Molekulargewicht $M_w$ von 28.000 g/mol (bestimmt bei Raumtemperatur durch GPC in Methylenchlorid gegen einen BPA-PC-Standard). Komponente A.2 kam als Granulat zum Einsatz.

Komponente B

Krasol HLBHP 2000 (Cray Valley S.A., Saint-Avold Cedex, Frankreich): Hydrogeniertes lineares Polybutadien, welches doppelt endständig mit primären Hydroxylgruppen funktionalisiert ist. Das Produkt weist eine Viskosität bei 25°C von 13 Pas auf.

Komponente C.1

TIB KAT® 635 (TIB Chemicals AG, Mannheim, Deutschland): Zinkacetat

Komponente C.2

Catana™ CAA 2947 (Sachem Inc., Austin, TX, USA): Zinkoktanoat

Komponente C.3

Zinkstearat (Reinheit: >95%) von Thermo Fisher (Kandel) GmbH, Kandel, Deutschland

Komponente C.4

Tetraphenylphosphoniumphenolat mit einem Gehalt an (Kristall)Phenol von 35 Gew.-% von Feihe Chemical Co., Ltd., Xiamen, Fujian, China

Komponente C.5

Tetrabutylphosphoniumacetat-Essigsäurekomplex von Sachem Inc., Austin, TX, USA
Alle Katalysatoren (Komponenten C.1 bis C.5) kamen als Feststoffe zum Einsatz.

Herstellung thermoplastischer Formmassen enthaltend das erfindungsgemäße Blockcopolymer

Zur Herstellung thermoplastischer Formmassen enthaltend das erfindungsgemäße Blockcopolymer wurde zunächst eine homogene Pulvermischung aus Komponente A.1 mit der jeweiligen Komponente C mittels eines Labor-Containermischers vom Typ Mixaco LAB CM 1,5 (MIXACO Dr. Herfeld GmbH & Co KG, Neuenrade, Deutschland)

hergestellt. Die derart hergestellte Pulvermischung wurde über den Haupteinzug in einen Doppelwellenextruder Leistritz ZSE 27 MAXX (Leistritz, Nürnberg, Deutschand) dosiert. Der Doppelwellenextruder verfügte über elf Gehäuse, die im Schmelzebereich auf 240 °C bis 270 °C temperiert wurden. Die Pulvervormischung wurde in einer ersten Knetzone im dritten Gehäuse durch Einbringung mechanischer Energie aufgeschmolzen und auf eine Schmelzetemperatur von ca. 240°C gebracht. Die Dosierung der bei Raumtemperatur vorliegenden Komponente B in den Doppelwellenextruder erfolgte in die Schmelze der Mischung der Komponenten A und C bei einer Temperatur dieser Schmelze von ca. 240°C mit einer anschließenden Misch- und Dispergierzone im vierten Gehäuse. Im Anschluss erfolgte eine Entgasung über zwei Entgasungsstufen, wobei sich die erste Entgasungsstufe über ein und die zweite Entgasungszone über drei Gehäuse erstreckte. In der ersten Entgasungsstufe wurde ein Absolutdruck von <200 mbar und in der zweiten Entgasungsstufe ein Absolutdruck von <5 mbar angelegt. Im Anschluss an die Entgasungszonen erfolgte der Austrag der derart reaktivcompoundierten Zusammensetzung über eine Düsenplatte, die Abkühlung der mit ca. 280 °C aus dem Extruder austretenden Schmelze in einem Wasserbad und die Granulation des dadurch verfestigten Polymerstrangs. Die Verweilzeit der Schmelze im Doppelwellenextruder betrug etwa vier Minuten. Der Durchsatz betrug 1,5 kg/h. Der Extruder wurde mit einer Drehzahl von 120 Umdrehungen pro Minute betrieben.

**Charakterisierung der thermoplastischen Formmassen enthaltend das erfindungsgemäße Blockcopolymer**

Zwecks Bestimmung des Umsatzes der aliphatischen OH-Gruppen der Komponente B in einer Umesterungsreaktion mit Komponente A sowie der Selektivität dieser Reaktion in Bezug auf die Ausbildung von A-B- und B-B-verbrückten Umesterungsstruktureinheiten wurden die derartig erhaltenen Verfahrensprodukte $^1$H-NMR-spektroskopisch bei Raumtemperatur in deuteriertem Chloroform untersucht. Dabei wurden die integrierten Intensitäten I der Multipletts im Bereich um 3,65 ppm (2H, Methylenprotonen der -CHzOH-Endgruppen in der nicht abreagierten Komponente B), im Bereich um 4,15 ppm (2x2H, Methylenprotonen in den B-B-carbonatverbrückten Umesterungsstruktureinheiten -CHz-O-C(O)-O-CHz-) und im Bereich von 4,25 ppm (2H, Methylenprotonen in den A-B-carbonatverbrückten Umesterungsstruktureinheiten -Phenyl-O-C(O)-O-$CH_2$-) ausgewertet.

Da eine Eliminierung von Wasser aus der OH-terminierten Komponente B unter Ausbildung endständiger Doppelbindungen in allen Fällen $^1$H-NMR-spektroskopisch ausgeschlossen werden konnte und weitere Nebenreaktionen nicht in Frage kommen, lässt sich der Gesamtumsatz der OH-Gruppen der Komponente B in der Umesterungsreaktion aus den integrierten Intensitäten I der Multipletts im Bereich um 3,65 ppm, 4,15 ppm und 4,25 ppm gemäß Formel (1) berechnen:

$$\text{Umsatz [\%]} = 100 \cdot (2 \cdot [\text{B-B}] + [\text{A-B}]) / (2 \cdot [\text{B-B}] + [\text{A-B}] + [\text{-CH}_2\text{OH}]) = 100 \cdot (I_{4,15\ ppm} + I_{4,25\ ppm}) / (I_{4,15\ ppm} + I_{4,25\ ppm} + I_{3,65\ ppm}) \quad (1)$$

Bei denjenigen Verfahrensprodukten, bei denen gemäß Formel (1) ein vollständiger bzw. zumindest ein hoher Umsatz (>75%) der OH-Gruppen aus Komponente B ermittelt wurde, wurde zusätzlich die Selektivität der Umesterungsreaktion in Bezug auf die Ausbildung von A-B-verbrückten Umesterungsstruktureinheiten, das heißt der molare Anteil der A-B-verbrückten Umesterungseinheiten im Verfahrensprodukt in Bezug auf die Summe der A-B- und B-B-verbrückten Umesterungseinheiten, aus den integrierten Intensitäten der Multipletts im Bereich um 3,65 ppm, 4,15 ppm und 4,25 ppm gemäß der Formel (2) berechnet:

$$\text{Selektivität für A-B [\%]} = 100 \cdot [\text{A-B}] / ([\text{A-B}]+[\text{B-B}]) = 100 \cdot I_{4,25\ ppm} / (I_{4,25\ ppm} + 0,5 \cdot I_{4,15\ ppm}) \quad (2)$$

Dabei stehen in Formeln (1) und (2) [A-B] und [B-B] für die molaren Mengen der A-B- bzw. B-B-verbrückten Umesterungsstruktureinheiten in dem erfindungsgemäßes Blockcopolymer enthaltendem Verfahrensprodukt und [-CHzOH] für die molare Menge an OH-Endgruppen in nicht oder nicht vollständig umgesetztem Polymer B im Verfahrensprodukt.

**Tabelle 1:** Vergleich von unterschiedlichen Katalysatoren

| **Zusammensetzung** | **V1** | **2** | **3** | **4** | **V5** | **V6** |
|---|---|---|---|---|---|---|
| A.1 | 90 | 90 | 90 | 90 | 90 | 90 |
| B | 10 | 10 | 10 | 10 | 10 | 10 |
| C.1 | | 0,05 | | | | |

(fortgesetzt)

| Zusammensetzung | V1 | 2 | 3 | 4 | V5 | V6 |
|---|---|---|---|---|---|---|
| C2 | | | 0,05 | | | |
| C.3 | | | | 0,05 | | |
| C.4 | | | | | 0,05 | |
| C.5 | | | | | | 0,05 |
| **Eigenschaften** | | | | | | |
| Umsatz aliphatisches OH [%] | <1 | 100 | 100 | 100 | 22 | 8 |
| Selektivität A-B [%] | | 78 | 74 | 71 | | |

Die Daten in Tabelle 1 zeigen, dass mit den verschiedenen Umesterungskatalysatoren in einer Konzentration von 0,05 Gew.-Teilen nur dann ein vollständiger Umsatz erzielt wird, wenn als Katalysator ein erfindungsgemäßes Metallsalz gemäß Komponente C zum Einsatz kommt (Beispiele 2 bis 4). Ohne Katalysator (V1) sowie bei Verwendung anderer aus dem Stand der Technik bekannter Umesterungskatalysatoren wie Phosphoniumsalzen werden dagegen unter den Bedingungen des erfindungsgemäßen Verfahrens nur unzufriedenstellende Umsätze in der Umesterung realisiert (V5 und V6).

**Tabelle 2:** Effekt der Katalysatorkonzentration

| Zusammensetzung | V7 | 8 | 2 | 9 | 10 |
|---|---|---|---|---|---|
| A.1 | 90 | 90 | 90 | 90 | 90 |
| B | 10 | 10 | 10 | 10 | 10 |
| C.1 | 0,005 | 0,025 | 0,05 | 0,5 | |
| C.3 | | | | | 0,5 |
| **Eigenschaften** | | | | | |
| Umsatz aliphatisches OH [%] | 16 | 79 | 100 | 100 | 100 |
| Selektivität A-B [%] | | 76 | 78 | 69 | 74 |

Die Daten in Tabelle 2 zeigen, dass zur Erzielung des angestrebten hohen Umesterungsumsatzes im erfindungsgemäßen Verfahren eine Mindestmenge an Komponente C zum Einsatz kommen muss. Ist die Einsatzmenge der Komponente C kleiner als 0,01 Gew.-Teile, bezogen auf in Summe 100 Gew.-Teile der Komponenten A und B, so resultieren unter ansonsten erfindungsgemäßen Verfahrensbedingungen nur unzufriedenstellende Umesterungsumsätze (V7). Für die Realisierung eines vollständigen Umsatzes muss Komponente C in einer Einsatzmenge der Komponente C größer 0,03 Gew.-Teile, bezogen auf in Summe 100 Gew.-Teile der Komponenten A und B, eingesetzt werden (siehe Beispiel 8, welches nicht im bevorzugten Ausführungsbereich der Erfindung liegt). Höhere Mengen an dem erfindungsgemäßen Katalysator gemäß Komponente C lösen zwar die erfindungsgemäße Aufgabe, sind aber aus Kostengesichtspunkten sowie auch aus weitergehenden technischen Gründen nicht bevorzugt, da überschüssiger Katalysator zu einer Beeinträchtigung der Thermo- und Alterungsbeständigkeit des Verfahrensproduktes führen kann. Insofern liegen auch die Beispiele 9 und 10 nicht im bevorzugten Ausführungsbereich der Erfindung.

Weiterhin zeigen die Beispiele in den Tabellen 1 und 2, dass die Produkte des erfindungsgemäßen Verfahrens, unabhängig von der Art des erfindungsgemäßen Katalysators und dessen Konzentration, sofern sie sich innerhalb des erfindungsgemäßen Konzentrationsbereichs bewegt, allesamt A-B-Umesterungsselektivitäten in ähnlicher Größenordnung aufweisen. Somit erweist sich das erfindungsgemäße Verfahren als robust im Hinblick auf die Herstellung von solchen speziellen erfindungsgemäßen Blockcopolymeren mit einer A-B-Selektivität im Konzentrationsbereich von 60 bis 85 %.

**Ausprüfung einer erfindungsgemäßen Blockcopolymer enthaltenden thermoplastischen Formmasse als Additiv in Polycarbonat-Zusammensetzungen**

Das Produkt des erfindungsgemäßen Verfahrens gemäß Beispiel 2 enthaltend das erfindungsgemäße Blockcopolymer wurde als Additiv in einer thermoplastischen Polycarbonat-Formmasse eingesetzt. Die thermoplastischen

Polycarbonat-Formmassen wurden aus den Zusammensetzungen gemäß Tabelle 3 durch Schmelzecompoundierung auf einem Zweiwellenextruder ZSK26-MC18 der Fa. Coperion, Werner & Pfleiderer (Stuttgart, Deutschland) bei einer Massetemperatur von 280°C und unter Anlegen eines Unterdrucks von 100 mbar (absolut) hergestellt. Aufgrund der Einsatzmenge des Verfahrensproduktes aus Beispiel 2 enthaltend das erfindungsgemäße Blockcopolymer wird eine Menge von 3 Gew.-% an olefinischen Struktureinheiten in die thermoplastische Polycarbonat-Formmasse gemäß Beispiel 12 in Tabelle 3 eingetragen.

Aus den derart hergestellten thermoplastischen Polycarbonat-Formmassen wurden Prüfkörper bei einer Massetemperatur von 280°C und bei einer Werkzeugtemperatur von 80°C auf einer Spritzgießmaschine Typ Arburg 270 E geformt.

Als Maß für die Wärmeformbeständigkeit wurde die Erweichungstemperatur Vicat B/120 bestimmt an Prüfstäben der Dimension von 80 mm x 10 mm x 4 mm gemäß ISO 180/1A (Version von 2014). Die Bruchdehnung wurde bestimmt in einem Zugversuch an Schulterstäben der Dimension von 170 mm x 10 mm x 4 mm bei 23°C gemäß ISO 527 (Version von 1996) mit einer Dehnrate von 5 mm/min.

Als Maß für die Chemikalienbeständigkeit diente die Spannungsrissbeständigkeit (ESC) in Rapsöl. Bestimmt wurde die Zeit bis zum spannungsrissinduzierten Bruchversagen eines Prüfkörpers der Abmessung 80 mm x 40 mm x 4 mm bei Raumtemperatur, wobei der Prüfkörper mittels einer Spannschablone mit einer externen Randfaserdehnung von 2,4 % beaufschlagt und vollständig in das Rapsöl eingetaucht wurde. Die Messung erfolgte gemäß DIN EN ISO 22088 (Version von 2006).

**Tabelle 3:** Ausprüfung des das erfindungsgemäße Blockcopolymer enthaltenden Verfahrensprodukts als Additiv in Polycarbonat-Zusammensetzungen

| **Zusammensetzung** | **V11** | **12** |
|---|---|---|
| A.2 | 100 | 70 |
| Blockcopolymer enthaltendes erfindungsgemäßes Verfahrensprodukt gemäß Beispiel 2 | | 30 |
| **Eigenschaften** | | |
| Vicat B120 [°C] | 145 | 140 |
| Schmelzeviskosität (260°C/1000$s^{-1}$) [Pas] | 650 | 286 |
| Bruchdehnung [%] | 126 | 124 |
| ESC (Zeit bis Bruch) [h] | 9 | 22 |

Die Daten in Tabelle 3 zeigen, dass durch Einbringung einer olefinischen Komponente in eine thermoplastische Polycarbonat-Formmasse über das erfindungsgemäße Blockcopolymer enthaltende Verfahrensprodukt gemäß Beispiel 2 als Additiv überraschenderweise gleichzeitig die Spannungsrissbeständigkeit des Polycarbonats sowie dessen Schmelzefließfähigkeit erheblich verbessert wird, ohne dass dabei in nennenswertem Umfang die Wärmeformbeständigkeit und die Bruchdehnung als Maß für die Materialduktilität leidet. Das ist insofern überraschend, als dass dem Fachmann bekannte Maßnahmen zur Verbesserung der Spannungsrissbeständigkeit in der Regel eine eher negative Auswirkung auf die Schmelzefließfähigkeit ausüben.

## Patentansprüche

**1.** Verfahren zur Herstellung eines Blockcopolymers, in dem eine Zusammensetzung enthaltend

A) mindestens einen Vertreter ausgewählt aus der Gruppe bestehend aus Polycarbonaten, Polyestern und Polyestercarbonaten,
B) mindestens ein zweites Polymer ausgewählt aus der Gruppe bestehend aus jeweils OH-und/oder COOH-funktionalisierten Vinyl(co)polymeren, Olefin(co)polymeren und (Organo)Polysiloxanen,
C) mindestens ein Übergangsmetall-Carboxylat-Salz enthaltend ein Übergangsmetallkation $M^{n+}$, wobei n für eine ganze Zahl zwischen 1 und 4 steht, und ein Carboxylatanion einer einoder mehrwertigen Carbonsäure,
wobei Komponente C in einer Menge von mindestens 0,01 Gew.-Teilen, bezogen auf in Summe 100 Gewichtsteile der Komponenten A und B, zum Einsatz kommt,
durch Einbringung mechanischer und/oder thermischer Energie aufgeschmolzen, die Komponenten der Zusammensetzung gemischt und ineinander dispergiert
und die Komponenten A und B in der Schmelzedispersion der Komponenten zumindest teilweise zu dem

Blockcopolymer umgesetzt werden.

2. Verfahren gemäß Anspruch 1, **dadurch gekennzeichnet, dass** es sich bei Komponente A um ein Polycarbonat handelt.

3. Verfahren gemäß Anspruch 2, wobei die Komponente A Struktureinheiten abgeleitet von mindestens einem aromatischen Diol in einem Anteil von mindestens 50 Mol.-%, bezogen auf in Summe 100 Mol.-% der von aromatischen und optional aliphatischen Diolen abgeleiteten Struktureinheiten in Komponente A, enthält.

4. Verfahren gemäß einer der vorhergehenden Ansprüche, **dadurch gekennzeichnet, dass** Polymer B $\alpha$-ständig oder $\alpha,\omega$-ständig mit OH- und/oder COOH-Gruppen funktionalisiert ist.

5. Verfahren gemäß einem der vorhergehenden Ansprüche, **dadurch gekennzeichnet, dass** die OH-und/oder COOH-Funktionen im Polymer B jeweils entweder über Methylengruppen $-CH_2-$ oder über einen aromatischen Ring mit dem polymeren Rückgrat oder mit Seitenketten oder Seitengruppen des polymeren Rückgrats des Polymers B verknüpft sind.

6. Verfahren gemäß einem der vorhergehenden Ansprüche, **dadurch gekennzeichnet, dass** die OH-und/oder COOH-Funktionen im Polymer B jeweils über Methylengruppen $-CH_2-$ mit dem polymeren Rückgrat oder mit Seitenketten oder Seitengruppen des polymeren Rückgrats des Polymers B verknüpft sind.

7. Verfahren gemäß einer der vorhergehenden Ansprüche, **dadurch gekennzeichnet, dass** in Komponente C das Übergangsmetallkation $Zn^{2+}$ ist.

8. Verfahren gemäß einer der vorhergehenden Ansprüche, **dadurch gekennzeichnet, dass** Komponente C in einer Menge, bezogen auf in Summe 100 Gew.-Teile der Komponenten A und B, von 0,02 bis 1,0 Gew.-Teilen zum Einsatz kommt.

9. Verfahren gemäß einer der vorhergehenden Ansprüche, **dadurch gekennzeichnet, dass** das Verfahren in einem Verfahrensaggregat ausgewählt aus der Gruppe bestehend aus Doppelwellenextrudern, Innenknetern, kontinuierlichen oder diskontinuierlichen Co-Knetern und Filmtrudern ausgeführt wird,
wobei die Schmelzetemperatur im Bereich von 240 bis 320°C liegt.

10. Verfahren gemäß einer der vorhergehenden Ansprüche, **dadurch gekennzeichnet, dass** die Komponente B, bezogen auf in Summe 100 Gew.-Teile der Komponenten A und B, in einer Menge von 3 bis 25 Gew.-Teilen zum Einsatz kommt.

11. Blockcopolymer enthaltend Blöcke A*, abgeleitet von mindestens einem Polymer A, und Blöcke B*, abgeleitet von mindestens einem Polymer B,

wobei Polymer A mindestens ein Polycarbonat und Polymer B mindestens ein Polymer ausgewählt aus der Gruppe bestehend aus jeweils OH- und/oder COOH-funktionalisierten Vinyl(co)polymeren, Olefin(co)polymeren und (Organo)Polysiloxanen ist,
**dadurch gekennzeichnet, dass** das Blockcopolymer Struktureinheiten gemäß Formeln x und y enthält

$$-A^*-O-C(O)-(O)_n-B^*- \qquad (x)$$

$$-B^*-(O)_o-C(O)-(O)_p-B^*- \qquad (y)$$

wobei n, o und p unabhängig voneinander 0 oder 1 bedeuten,
wobei -C(O)- für eine Carbonylgruppe steht,
**dadurch gekennzeichnet, dass** die Struktureinheiten gemäß Formel x in dem Blockcopolymer in einem molaren Anteil von 60 bis <85 mol%, bezogen auf in Summe 100 mol% Struktureinheiten gemäß Formeln x und y, vorliegen.

12. Blockcopolymer gemäß Anspruch 11, **dadurch gekennzeichnet, dass** n, o und p alle denselben Wert, also alle entweder den Wert 0 oder alle den Wert 1, aufweisen.

13. Blockcopolymer gemäß einem der Ansprüche 11 oder 12, **dadurch gekennzeichnet, dass** das Polymer B ein Olefin(co)polymer ist.

14. Thermoplastische Formmasse enthaltend ein Blockcopolymer gemäß einem der Ansprüche 11 bis 13.

15. Formteil enthaltend ein Blockcopolymer gemäß einem der Ansprüche 11 bis 13.

Europäisches Patentamt
European Patent Office
Office européen des brevets

# EUROPÄISCHER RECHERCHENBERICHT

Nummer der Anmeldung
EP 24 15 9000

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2020/212229 A1 (COVESTRO INTELLECTUAL PROPERTY GMBH & CO KG [DE]) 22. Oktober 2020 (2020-10-22) * Anspruch 1 * ----- | 1-15 | INV. C08G81/00 C08G63/91 C08G81/02 C08F8/00 C08G64/18 C08G77/448 |
| A | WO 2012/018682 A1 (AMYRIS INC [US]; MCPHEE DEREK JAMES [US]) 9. Februar 2012 (2012-02-09) * Ansprüche 13,32 * ----- | 1-15 | |
| A | WO 2023/280608 A1 (COVESTRO DEUTSCHLAND AG [DE]) 12. Januar 2023 (2023-01-12) * Anspruch 1 * * Seite 6, Zeile 14 - Zeile 16 * ----- | 1-15 | |
| A | WO 2022/128837 A1 (COVESTRO DEUTSCHLAND AG [DE]) 23. Juni 2022 (2022-06-23) * Ansprüche 1,4,5 * * Seite 16, Absatz 3 * ----- | 1-15 | RECHERCHIERTE SACHGEBIETE (IPC) |
| A | US 10 155 845 B2 (SABIC GLOBAL TECHNOLOGIES BV [NL]) 18. Dezember 2018 (2018-12-18) * Ansprüche 1,7 * ----- | 1-15 | C08G C09J C08F |
| A | FRÉDÉRIC BECQUART ET AL: "Poly[ethylene-co -(vinyl alcohol)]- graft -poly( &egr; -caprolactone) Synthesis by Reactive Extrusion, 1 - Structural and Kinetic Study", MACROMOLECULAR MATERIALS AND ENGINEERING, Bd. 294, Nr. 10, 12. Oktober 2009 (2009-10-12), Seiten 643-650, XP055189703, ISSN: 1438-7492, DOI: 10.1002/mame.200900134 * Zusammenfassung * ----- | 1-15 | |

Der vorliegende Recherchenbericht wurde für alle Patentansprüche erstellt

1

| Recherchenort | Abschlußdatum der Recherche | Prüfer |
|---|---|---|
| Den Haag | 4. November 2024 | Costantini, Nicola |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 15 9000

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-11-2024

| Im Recherchenbericht angeführtes Patentdokument | Datum der Veröffentlichung | Mitglied(er) der Patentfamilie | Datum der Veröffentlichung |
|---|---|---|---|
| WO 2020212229 A1 | 22-10-2020 | CN 113677735 A | 19-11-2021 |
| | | EP 3725819 A1 | 21-10-2020 |
| | | US 2022145073 A1 | 12-05-2022 |
| | | WO 2020212229 A1 | 22-10-2020 |
| WO 2012018682 A1 | 09-02-2012 | AU 2011286019 A1 | 29-11-2012 |
| | | BR 112012029215 A2 | 29-11-2016 |
| | | CA 2798299 A1 | 09-02-2012 |
| | | CN 103052664 A | 17-04-2013 |
| | | EP 2601229 A1 | 12-06-2013 |
| | | ES 2442184 T3 | 10-02-2014 |
| | | JP 2013532767 A | 19-08-2013 |
| | | KR 20130124153 A | 13-11-2013 |
| | | US 2013123379 A1 | 16-05-2013 |
| | | WO 2012018682 A1 | 09-02-2012 |
| WO 2023280608 A1 | 12-01-2023 | CN 117693546 A | 12-03-2024 |
| | | EP 4367166 A1 | 15-05-2024 |
| | | JP 2024525556 A | 12-07-2024 |
| | | KR 20240028411 A | 05-03-2024 |
| | | US 2024270961 A1 | 15-08-2024 |
| | | WO 2023280608 A1 | 12-01-2023 |
| WO 2022128837 A1 | 23-06-2022 | CN 117157359 A | 01-12-2023 |
| | | EP 4015580 A1 | 22-06-2022 |
| | | EP 4263709 A1 | 25-10-2023 |
| | | US 2024132661 A1 | 25-04-2024 |
| | | WO 2022128837 A1 | 23-06-2022 |
| US 10155845 B2 | 18-12-2018 | CN 107849231 A | 27-03-2018 |
| | | EP 3303448 A1 | 11-04-2018 |
| | | KR 20180014052 A | 07-02-2018 |
| | | US 2018112035 A1 | 26-04-2018 |
| | | WO 2016189494 A1 | 01-12-2016 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4806599 A
- WO 2017189223 A1
- EP 1063253 A1
- WO 2015052110 A1
- WO 2015052106 A1
- DE 1495626 B
- DE 2232877 A
- DE 2703376 A
- DE 2714544 A
- DE 3000610 A
- DE 3832396 A
- DE 3007934 A
- US 3028635 A
- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- FR 1561518 A
- JP 61062039 A
- JP 61062040 A
- JP 61105550 A
- DE 2842005 A
- US 3419634 A
- DE 3334782 A
- WO 2015052106 A2
- DE 2940024 A
- US 5393843 A
- US 5002676 A


### In der Beschreibung aufgeführte Nicht-Patentliteratur


- **P. LUTZ et al.** An efficient bifunctional lithium-organic initiator to be used in apolar solvents. *Polymer*, 1982, vol. 23, 1953-1959
- **F. BANDERMANN et al.** Bifunctional anionic initiators: A critical study and overview. *Makromol. Chem.*, 1985, vol. 186, 2017-2024
- **G. BEINERT et al.** A bifunctional anionic initiator soluble in non-polar solvents. *Makromol. Chem.*, 1978, vol. 179, 551-555